# EUROPÄISCHE PATENTSCHRIFT

(11) **EP 3 628 808 B1**
(45) Veröffentlichungstag und Bekanntmachung des Hinweises auf die Patenterteilung: **28.01.2026**
(21) Anmeldenummer: 19199891.3
(22) Anmeldetag: 26.09.2019
(51) Int. Cl.: E06B 1/62, E04B 1/68, B29D 99/00

(54) **VERFAHREN ZUR HERSTELLUNG EINES SCHAUMSTOFFDICHTBANDES UND SCHAUMSTOFFDICHTBAND**
METHOD FOR PRODUCING A FOAM SEALING STRIP AND A FOAM SEALING STRIP
PROCÉDÉ DE FABRICATION D'UNE BANDE D'ÉTANCHÉITÉ EN MOUSSE ET BANDE D'ÉTANCHÉITÉ EN MOUSSE

(30) Priorität: 26.09.2018 DE 102018123809; 26.09.2018 DE 102018123811; 31.10.2018 DE 102018127312; 14.12.2018 DE 202018107177 U
(43) Veröffentlichungstag der Anmeldung: 01.04.2020
(73) Patentinhaber: Tremco CPG Germany GmbH, 92439 Bodenwöhr (DE)
(72) Erfinder: Komma, Markus, 93133 Burglengenfeld (DE); Hübschmann, Martin, 92546 Schmidgaden (DE); Nauck, Helmar, 12557 Berlin (DE)
(74) Vertreter: Hannke Bittner & Partner mbB Regensburg

(56) Entgegenhaltungen:
- EP-A2- 0 229 951
- DE-A1- 102016 114 227
- DE-A1- 102017 105 323
- DE-U1- 202013 101 372
- US-A- 2 902 091
- US-B1- 10 081 939

## Beschreibung

Die vorliegende Erfindung bezieht sich auf ein Verfahren zur Herstellung eines Schaumstoffdichtbandes und auf ein entsprechendes Dichtband. Insbesondere bezieht sich die Erfindung auf ein Dichtband im Baubereich, etwa zum Abdichten von Fassaden, Rahmen und dergleichen, etwa gegenüber Mauerwerk oder anderen Baukörpern, beispielsweise zum Abdichten von Fensterrahmen gegenüber Mauerwerk. Derartige Dichtbänder, auch als Multifunktionsbänder bekannt, können beispielsweise eingesetzt werden, um die entsprechenden abzudichtenden Bereiche luftdicht abzutrennen. Dabei ist es teilweise aus dem Stand der Technik bekannt, Kombinationen aus Schaum, insbesondere imprägniertem Schaum, und Membranen zu verwenden. Dieser imprägnierte Schaum stellt sich zurück und erreicht so eine hinreichende Dichte, um die abzudichtenden Spalten entsprechend auszufüllen. Dabei wäre es wünschenswert, dass auch die Membranen vom imprägnierten Schaum fest an die jeweiligen Fugenflanken angepresst werden. Allerdings hat sich in der Praxis gezeigt, dass in einem rückgestellten Zustand genau an denjenigen Stellen, an denen die Schichten angeordnet sind, die Expansion des Schaumstoffes zumindest geringfügig behindert wird. Auf diese Weise können teilweise die geforderten Werte der Luftdichtigkeit (mindestens die BG-R nach DIN 18542:2009-07) nicht erreicht werden.

Aus dem Stand der Technik sind unterschiedliche Dichtbänder und auch Schaumstoffdichtbänder bekannt. Diese werden beispielsweise eingesetzt, um Fenster- oder Türrahmen bzw. deren Leibungen gegenüber einem Mauerwerk abzudichten.

Außerdem sind aus dem Stand der Technik sogenannte Multifunktionsbänder bekannt. Dabei gestaltet es sich teilweise als schwierig oder nur mit einem hohen Materialeinsatz (unter Verwendung einer starken Kompression im Einsatz) als durchführbar, eine geforderte Luftdichtigkeit zu erreichen.

Daher ist man im Stand der Technik teilweise bestrebt, die Luftdichtigkeit derartiger Bänder zu erhöhen. Dies scheitert oft daran, dass entsprechend verwendete Folien an der Auflagefläche zu dem abzudichtenden Bauelement oder aber an dem Baukörper nicht voll anliegen. Auch kann es vorkommen, dass eine Folie, beispielsweise eine Membran, eine Selbstklebung ist, die bei einer Komprimierung mit einem Schaumstoff zusammen komprimiert wird, sich dabei die Elemente verkleben und so nicht mehr weiter aufgehen bzw. sich expandieren, so dass sie nicht sicher das Element gegenüber dem Baukörper abschließen. Dies wird insbesodnere dann erschwert, wenn Profile von Kunststoff oder Metallfenstern und Türen an ihrer Stirnseite Nuten oder Stege haben, die ein Koppeln mit weiteren Profilen ermöglichen sollen.

Aus dem Stand der Technik sind daher auch Schaumstoffkörper bekannt, die in ihrem Inneren eine Trennschicht bzw. eine Membran, eine Folie oder dergleichen aufweisen, welche für die insgesamt geforderte Luftdichtigkeit sorgt. Zum Herstellen derartiger Dichtelemente sind unterschiedliche Verfahren bekannt. So ist es beispielsweise bekannt, dass in dem Schaumstoffkörper ein Schlitz eingebracht wird, und in diesen Schlitz wiederum das Dichtelement wie etwa eine Membran eingebracht wird. Daher sind diese Verfahren im Stand der Technik teilweise relativ umständlich.

DE 10 2016 114227 A1 beschreibt ein Verfahren zum Herstellen eines Schaumstoffdichtbandes ausgehend von ein Schaumstoffträger, der während seines Transports entlang einer vorgegebenen Transportrichtung in wenigstens zwei voneinander vollständig getrennte Schaumstoffträgerstreifen geschnitten wird. Wesentlich ist, dass ein Abstand zwischen diesen Schaumstoffträgerstreifen erhöht wird. In einer Variante dieses Verfahrens wird ein überbreiter Klebebandstreifen derart um jeweils 3 Seitenflächen der Streifen geführt, dass dieser Klebebandstreifen nach dem wieder Zusammenführen der Streifen entlang der Breitenrichtung wechselseitig eine obere und untere Außenoberfläche des dabei gebildeten Verbundes der Schaumstoffträgerstreifen bildet. Bei einem nach diesem Verfahren hergestellten Dichtband verläuft der Klebebandstreifen entlang einer oberen oder unteren Außenoberfläche des Dichtbandes senkrecht oder in einem von der Dickenrichtung abweichenden Winkel zwischen der oberen Außenoberfläche des Dichtbandes und der unteren Außenoberfläche des Dichtbandes und anschließend entlang der anderen Außenoberfläche.

Der vorliegenden Erfindung liegt daher einerseits die Aufgabe zu Grunde ein Dichtband herzustellen, welches in einfacherer Weise herstellbar ist, als im Stand der Technik.

Üblicherweise verlaufen weiter im Stand der Technik die jeweiligen Trennschichten senkrecht zu einer Erstreckungsrichtung des Bandes, und einem eingebauten Zustand beispielsweise parallel zur Rauminnenseite zur Raumaußenseite. Dies bedeutet, dass bei eventuell auftretenden wenn auch kurzzeitigen Dehnungen dieses Schaumstoffkörpers es denkbar ist, dass die Membran im Inneren reißt oder Öffnungen erhält, die der Dichtigkeit insgesamt entgegenstehen.

Der vorliegenden Erfindung liegt daher auch die Aufgabe zugrunde, die Strapazierfähigkeit derartiger Dichtbänder zu erhöhen und ein Dichtband zur Verfügung zu stellen, welches eine verbesserte Abdichtung ermöglicht und welches insbesondere auch in denjenigen Bereichen, die durch die Trennschicht oder allgemein ein Trennelement möglicherweise in der Rückstellung beeinträchtigt sind, eine entsprechend höhere Abdichtung zu erreichen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Herstellen eines Schaumstoffdichtbandes wird zunächst ein Schaumstoffträger zur Verfügung gestellt und dieser Schaumstoffträger wird in einer Förderrichtung transportiert. Dabei erstreckt sich dieser Schaumstoffträger in einer zu der Förderrichtung parallelen Längsrichtung, in einer zu der Längsrichtung senkrechten Breitenrichtung und in einer Dickenrichtung, wobei diese Dickenrichtung senkrecht zu der Längsrichtung und der Breitenrichtung steht. Bevorzugt weist der Schaumstoffträger mindestens eine sich in Längsrichtung und Breitenrichtung erstreckende erste Oberfläche auf.

In einem weiteren Verfahrensschritt wird der Schaumstoffträger durch einen ersten Schnitt in einen ersten Schaumstoffträgerteil und einen zweiten Schaumstoffträgerteil bevorzugt unter Ausbildung jeweils einer zweiten Oberfläche geschnitten, wobei bevorzugt diese beiden Schaumstoffträgerteile durch den Schnitt (betrachtet in der Breitenrichtung) vollkommen getrennt werden. Dabei erstreckt sich dieser Schnitt zumindest in einer Längsrichtung und in der Breitenrichtung und/oder in der Förderrichtung und der Breitenrichtung.

In einem weiteren Verfahrensschritt wird eine Trennschicht an wenigstens einen der beiden Schaumstoffträgerteile an einer vorgegebenen Oberfläche angebracht. Weiterhin werden die beiden Schaumstoffträgerteile derart zusammengeführt, dass die Trennschicht zwischen dem ersten Schaumstoffträgerteil und dem zweiten Schaumstoffträgerteil angeordnet ist. Bevorzugt erstreckt sich die Trennschicht zumindest abschnittsweise auch in einer von der Längsrichtung (L) und der Breitenrichtung (B) abweichenden Richtung unter Ausbildung mindestens eines Bereichs eines minimalen Abstands (D1, D2) in Dickenrichtung (D) zu einer ersten Oberfläche.

In einer bevorzugten Ausführungsform wird die Trennschicht derart zwischen den beiden Schaumstoffträgerteilen angeordnet, dass die Dicke wenigstens eines der beiden Schaumstoffträgerteile betrachtet in der Breitenrichtung variiert.

Bevorzugt wird ein sich in Längsrichtung (L) und Breitenrichtung (B) erstreckender Streifen von dem Verbund der zusammengeführten Schaumstoffträgerteile abgetrennt.

Bei der Trennschicht kann es sich um eine folienartige Schicht handeln, welche beispielsweise an dem betreffenden Schaumstoffträgerteil angebracht, etwa angeklebt wird. Es wäre jedoch auch möglich, dass auf dem jeweiligen Schaumstoffträgerteil eine fließfähige Substanz aufgebracht wird, welche die Trennschicht ausbildet. Auch wären Kombinationen aus diesen beiden Maßnahmen möglich
Bei einem bevorzugten Verfahren bewirkt diese Trennschicht auch eine Haftung der Schaumstoffträgerteile aneinander.

Bevorzugt ist die Trennschicht zumindest im Wesentlichen luftdicht. Als luftdicht im Sinn dieser Erfindung soll verstanden werden, dass die Luftdurchlässigkeit unter 20l/m² x sec, bevorzugt 10l/m² x sec, weiter bevorzugt unter 5l/m² x sec, insbesondere bevorzugt unter 2l/m² x sec liegt. Diese Werte beziehen sich auf ein Messverfahren nach DIN EN ISO 9237 bei einer Dicke von 10 mm und Prüffläche von 100cm² und einem Prüfunterdruck von 0,5mbar.

Bei einem weiteren bevorzugten Verfahren werden die beiden Schaumstoffträgerteile nach dem Schneiden voneinander beabstandet. Dabei kann beispielsweise das erste Schaumstoffträgerteil weiter von dem ersten Schaumstoffträgerteil abgehoben werden, so dass sich ein Abstand zwischen den beiden Schaumstoffträgerteilen weiter erhöht

Bevorzugt verläuft die Trennschicht bezüglich der Breitenrichtung nicht oder lediglich abschnittsweise parallel, sondern sie ist zumindest gegenüber der Breitenrichtung zumindest abschnittsweise schräg und/oder gekrümmt. Besonders bevorzugt verläuft die Trennschicht in der gesagten Breitenrichtung wellenförmig. Bevorzugt verläuft die Schicht jedoch (bevorzugt wenigstens abschnittsweise) auch parallel zu der Längsrichtung.

Bei einem weiteren bevorzugten Verfahren wird der Schaumstoff imprägniert. Besonders bevorzugt wird der Schaumstoff imprägniert, bevor der besagte (insbesondere erste) Schnitt des Schneidens durchgeführt wird. Besonders bevorzugt wird der Schaumstoff zur verzögerten Rückstellung imprägniert.

Bevorzugt befindet sich dabei in einem Einbauzustand des Dichtbandes die besagte Trennschicht abschnittsweise näher an dem einen Bauteil und abstandweise näher an dem anderen Bauteil, welche durch das Dichtband miteinander verbunden sind.

Bei einem weiteren bevorzugten Verfahren wird der Schaumstoffträger geradlinig geschnitten und insbesondere in der Breitenrichtung geradlinig geschnitten. Daher wird besonders bevorzugt ein im Wesentlichen geradlinig verlaufendes Schneidwerkzeug verwendet. Auf diese Weise kann der Schneidvorgang vereinfacht werden. Dabei ist es möglich, beispielsweise ein umlaufendes Schneidwerkzeug zu verwenden oder aber in sich hin- und herbewegendes.

Bei dem Verfahren wird der Schaumstoffträger in einem zumindest teilweise komprimierten Zustand geschnitten. Dabei kann ein Grad dieser Komprimierung in der Breitenrichtung des Schaumstoffträgers variieren.

Bei einem weiteren bevorzugten Verfahren wird der Schaumstoffträger zwischen zwei Förderrollen transportiert und ein Abstand zwischen diesen beiden Förderrollen bevorzugt zumindest in Dickenrichtung variiert. Dies bedeutet, dass der Schaumstoffträger in der Breitenrichtung des Schaumstoffträgers unterschiedlich stark komprimiert wird. So könnten etwa eine der beiden Förderrollen eine wellenartige oder eine gestufte Struktur aufweisen und damit abschnittsweise näher an der anderen Förderrolle angeordnet sein, als an anderen Stellen.

Es ist vorgesehen, dass der Schaumstoffträger in seiner Dickenrichtung zumindest abschnittsweise komprimiert wird, wobei der Grad dieser Komprimierung über die Breitenrichtung hin variiert und der erste Schnitt in einem wenigstens teilweise komprimierten Zustand des Schaumstoffs durchgeführt wird.

Auch wäre es möglich, dass beispielsweise eine Förderrolle eine Welle aufweist, auf der in vorbestimmten Abständen Abstandseinstelleinrichtungen wie beispielsweise Scheiben angeordnet sind. Auf diese Weise wird eine entsprechende wellenförmige und/oder stufenförmige bzw. eine Struktur mit unterschiedlichen Abständen erreicht. Daneben wäre es auch möglich, dass auch die andere Förderrolle eine entsprechende Wellenstruktur aufweist.

Weiterhin wäre es auch möglich, dass die jeweiligen Wellenstrukturen der beiden Wellen ineinander greifen, dass also beispielsweise Abstandseinstelleinrichtungen der ersten Rolle in entsprechende Ausnehmungen der zweiten Rolle eingreifen ohne, dass sich die Förderrollen dabei berühren. Mit anderen Worten sind bevorzugt die Förderrollen derart beschaffen, dass diese Vorsprünge und Ausnehmungen aufweisen, wobei bevorzugt wenigstens ein Vorsprung einer Förderrolle in einer Ausnehmung der anderen Förderrolle eingreift.

Auf diese Weise kann eine sehr ausgeprägte Wellenstruktur des durch diese Förderrollen komprimierten Schaumstoffträgers erreicht werden. Bevorzugt wird auch eine Überkomprimierung des Schaumstoffträgers erreicht, d. h. eine Komprimierung, nach welcher der Schaumstoff (insbesondere abschnittsweise) (folienartig) zusammengedrückt bleibt. Bei einem bevorzugten Verfahren wird daher der Schaumstoff in Breitenrichtung unterschiedlich stark komprimiert bzw. auch in unterschiedlichen Positionen (bezüglich der Dickenrichtung) gefördert.

Auf diese Weise kann auch mit einem geradlinig verlaufenden Schneidwerkzeug ein nach einer Rückstellung des Schaumstoffs beispielsweise wellenförmiger Schnitt erzeugt werden.

Es wird demnach bevorzugt ein geradlinig verlaufendes Schneidwerkzeug verwendet und dem Schaumstoff eine Rückstellung ermöglicht.

Bevorzugt wird daher bezogen auf die Dickenrichtung des Schaumstoffträgers während oder nach der Komprimierung ein Schnitt erzeugt, der nach der Rückstellung des Schaumstoffs wenigstens ein Minimum und wenigstens ein Maximum und bevorzugt eine Vielzahl von Minima und eine Vielzahl von Maxima aufweist (wobei sich diese Minima und Maxima bevorzugt abwechseln). Bevorzugt weist der erzeugte Schnitt in der Breitenrichtung eine sich periodisch wiederholende Gestalt auf.

Bei dem Verfahren wird der Schaumstoff in seiner Dickenrichtung komprimiert, wobei der Grad dieser Komprimierung über die Breitenrichtung hin variiert und der erste Schnitt in einem wenigstens teilweise komprimierten Zustand des Schaumstoffs durchgeführt wird.

Bei einer weiteren bevorzugten Ausführungsform werden die beiden Schaumstoffträgerteile wieder miteinander verbunden und insbesondere miteinander verklebt. So ist es möglich, dass es sich bei der genannten Trennschicht um eine Selbstklebeschicht handelt, welche letztlich an beiden Schaumstoffträgerteilen angeklebt wird. Es könnte jedoch auch auf die betreffende Oberfläche eines der Schaumstoffträgerteile und insbesondere auf das untere Schaumstoffträgerteil eine Beschichtung aufgebracht, beispielsweise aufgesprüht werden, welche bevorzugt auch adhäsive Eigenschaften aufweist.

Bevorzugt weist in einem nicht komprimierten Zustand in dem Verbund der zusammengeführten Schaumstoffträgerteile die Trennschicht in Breitenrichtung ein wellenförmiges Profil auf, welches mindestens einen sich in Dickenrichtung gegenüber der Mittellinie verschobenen Talbereich und mindestens einen sich in Dickenrichtung in entgegengesetzter Richtung verschobenen Bergbereich aufweist.

Oft gestaltet es sich als schwierig, den Abstand zwischen der eingebrachten Trennschicht beispielsweise im Wellenberg oder Wellental und der jeweils benachbarten ersten Oberfläche derart gering zu halten, dass im Dichtband die Luftdichtigkeit in diesem Zwischenraum, der nicht von der Trennschicht durchzogen ist, ausreichend hoch ist. Daher wird bevorzugt dieser nicht von der Trennschicht durchzogene Streifen durch mindestens einen zweiten Schnitt entfernt.

In einer bevorzugten Verfahrensvariante ist daher vorgesehen, dass der abgetrennte Streifen sich in Dickenrichtung mindestens abschnittsweise über eine Dicke erstreckt, die mindestens dem minimalen Abstands der Trennschicht von der ersten Oberfläche entspricht. Eine größere Dicke ist zumindest in einem gewissen Maße unschädlich, da dadurch lediglich der jeweilige Wellenberg oder das jeweilige Wellental (zumindest teilweise) entfernt würde, aber dennoch die Trennschicht bis an die durch den Schnitt neu geschaffene Oberfläche heranreicht und so über die ganze Dicke eine ausreichende Luftdichtigkeit garantieren kann.

Weiterhin ist bevorzugt, dass ein weiterer Streifen von dem Verbund der zusammengeführten Schaumstoffträgerteile abgetrennt wird, wobei der weitere Streifen bevorzugt von der in Dickenrichtung dem ersten Streifen gegenüberliegenden Seite des Verbundes der zusammengeführten Schaumstoffträgerteile abgetrennt wird. Besonders vorteilhaft ist diese Verfahrensvariante, da dadurch der jeweils nicht von der Trennschicht durchzogene Bereich auf beiden Seiten des Verbunds der zusammengeführten Schaumstoffträgerteile entfernt werden kann und somit sowohl im Bereich der Wellenberge und Wellentäler gewährleistet sein kann, dass die Trennschicht jeweils bis an die durch den jeweiligen Schnitt neu geschaffene Oberfläche heranreicht und so über die ganze Dicke eine ausreichende Luftdichtigkeit garantieren kann.

Bei einem weiteren bevorzugten Verfahren wird an wenigstens einer Oberfläche wenigstens eines Schaumstoffträgers oder wenigstens eines Schaumstoffträgerteils eine weitere Schicht und insbesondere eine zusätzliche bzw. Klebeschicht, neben der oben erwähnten Trennschicht zwischen den Schaumstoffträgerteilen, angeordnet.

Bei dieser Klebeschicht Schicht handelt es sich bevorzugt um eine Selbstklebeschicht, mittels derer bei der Montage das Dichtband an wenigstens einem Baukörper angeklebt werden kann.

Bevorzugt handelt es sich bei der Klebeschicht um eine beidseitig klebende Schicht.

Besonders bevorzugt wird diese Klebeschicht an der jeweiligen Oberfläche (insbesondere einer unteren Oberfläche oder einer oberen Oberfläche des Schaumstoffträgerteils angeklebt). Dabei kann dieses Ankleben der Klebeschicht auch während eines weiteren Transports des Schaumstoffträgers bzw. des Schaumstoffträgerteils erfolgen.

Bei einem weiteren bevorzugten Verfahren fördern die Förderrollen den Schaumstoffträger wenigstens zeitweise derart, dass Bereiche der nach oben weisenden Oberfläche wenigstens abschnittsweise unterhalb von Bereichen der nach unten weisenden Oberfläche liegen. Mit anderen Worten wird bevorzugt der Schaumstoffträger so stark gekrümmt, dass in der Breitenrichtung betrachtet der Dickenabstand zwischen den höchsten Bereichen und den niedrigsten Bereichen dicker ist, als die Dicke des Schaumstoffs in dem komprimierten Zustand.

Bevorzugt wird der Schaumstoffträger durch wenigstens abschnittsweise ineinandergreifende (jedoch sich nicht berührende) Förderrollen geführt. So ist es möglich, dass eine Förderrolle als Abstandseinstelleinrichtungen Vorsprünge aufweist, welche jeweils in Ausnehmungen der anderen Förderrolle eingreift.

Bei dem Verfahren wird der Schaumstoff in seiner Dickenrichtung komprimiert, wobei der Grad der dieser Komprimierung über die Breitenrichtung hin variiert und der oben genannte erste Schnitt wird in einem wenigstens teilweise komprimierten Zustand des Schaumstoffes durchgeführt. Besonders bevorzugt wird der Schneidvorgang während des Komprimierens oder nach der Komprimierung und insbesondere unmittelbar nach der Komprimierung durchgeführt. So könnte beispielsweise ein Schneidelement unmittelbar nach den oben erwähnten Förderrollen angeordnet sein. Bei dem Schneidelement kann es sich beispielsweise um eine oder mehrere Sägeelemente handeln, welche die Schnitte durchführen. Dabei wäre es möglich, dass sich ein derartiges Schneideelement beispielsweise in der Breitenrichtung bewegt, um so den Schnitt leichter bewerkstelligen zu können. Ein Beispiel für eine bevorzugte Ausgestaltung eines solchen Schneideelements ist ein umlaufendes horizontales Bandmesser.

Bei einem weiteren bevorzugten Verfahren wird an wenigstens einer Oberfläche wenigstens eines Schaumstoffträgers oder wenigstens eines Schaumstoffträgerteils eine weitere Schicht angeordnet. Hierbei handelt es sich um eine zusätzliche Schicht, die zusätzlich zu der oben erwähnten Trennschicht zwischen den Schaumstoffträgerteilen und auch zusätzlich zu der Klebeschicht, die zum Befestigen des Dichtbands an einem Baukörper dient, angebracht wird.

Bei der weiteren Schicht kann es sich beispielsweise um eine Beschichtung wie etwa einen (Vlies-) Stoff handeln, der auf die Oberfläche aufgetragen wird, es könnte sich jedoch auch und bevorzugter Weise um ein folienartiges Element und noch bevorzugter um einen Schaumstoffelement handeln, welches auf der betreffenden Oberfläche angebracht bzw. angeklebt wird.

Bei einem weiteren bevorzugten Verfahren handelt es sich bei der an wenigstens einer der genannten Oberflächen angeordneten weiteren Schicht um eine Deckschicht, welche die jeweilige Oberfläche zumindest weitgehend vollflächig überdeckt. Dabei kann diese Deckschicht insbesondere an der besagten Oberfläche angeklebt werden.

Bei einem weiteren bevorzugten Verfahren handelt es sich bei dieser weiteren Schicht oder Deckschicht um eine weitere Schaumstoffschicht.

Bevorzugt handelt es sich bei der weiteren Schicht um eine Deckschicht, welche eine geringere Luftdurchlässigkeit aufweist als der oben genannte Schaumstoffträger. Bevorzugt ist diese Deckschicht luftdicht ausgebildet.

Bei einem weiteren bevorzugten Verfahren wird die weitere Schicht oder Deckschicht vor dem Schneiden des Schaumstoffträgers angebracht. Besonders bevorzugt wird die wenigstens eine Deckschicht wenigstens auch vor dem Komprimieren des Schaumstoffträgers in dessen Dickenrichtung angebracht.

Besonders bevorzugt wird diese Deckschicht an einer (bevorzugt ersten) Oberfläche angebracht, welche durch die Breitenrichtung und die Längenrichtung des Schaumstoffträgers bestimmt ist, also insbesondere an der oberen oder unteren Oberfläche.

Bei einem weiteren bevorzugten Verfahren wird an einer weiteren (bevorzugt ersten) Oberfläche des Schaumstoffträgers ebenfalls eine Deckschicht angebracht. Bei dieser Schicht kann es sich ebenfalls um eine Schaumstoffschicht handeln und insbesondere um einen Schaumstoff, der luftdicht ist bzw. einen höheren Luftwiderstand aufweist als der oben genannte Schaumstoffträger.

In einem weiteren bevorzugten Verfahren liegen sich zwei Deckschichten gegenüber und/oder werden durch ein Schaumstoffträgerteil voneinander getrennt.

Bei einem weiteren bevorzugten Verfahren steht die Dickenrichtung des Schaumstoffträgers senkrecht zu den genannten beiden Deckschichten.

Bei einem weiteren bevorzugten Verfahren liegen sich die (bevorzugt ersten) Oberflächen, an denen die beiden Deckschichten angeordnet sind, gegenüber. Besonders bevorzugt befinden sich die beiden Schaumstoffträger zwischen den genannten Deckschichten.

Bei einem weiteren bevorzugten Verfahren wird eine Zusammenstellung hergestellt, bei der zunächst eine erste Deckschicht, anschließend das erste Schaumstoffträgerteil anschließend die oben genannte Trennschicht, anschließend das zweite Schaumstoffträgerteil und schließlich eine weitere Deckschicht folgt. Die Schicht zwischen den Schaumstoffträgerteilen kann auch als Sperrschicht bezeichnet werden.

Bevorzugt sind die Deckschichten und die beiden Schaumstoffträgerteile zumindest temporär klebend verbunden. Dabei ist bevorzugt eine Deckschicht mit jeweils einem Schaumstoffträgerteil zumindest temporär klebend verbunden.

Die Deckschicht kann dazu dienen, die Führung des Schaumstoffträgers während dessen Transports zu verbessern. Besonders bevorzugt ist, dass die Deckschicht das abschnittsweise Komprimieren des Schaumstoffträgers vor dem Einbringen des ersten Schnitts unterstützt. Insbesondere kann die Deckschicht dazu dienen, den minimalen Abstand zwischen dem Schnitt und der nächstliegenden ersten Oberfläche gering zu halten.

Die Deckschicht kann - insbesondere bei temporär klebender Verbindung mit dem Schaumstoffträgerteil - separat abgeführt werden. Alternativ und besonders bevorzugt ist jedoch, dass die Deckschicht nach dem Einbringen des zweiten Schnitts zusammen mit dem jeweils abgetrennten Streifen abgeführt wird. Durch eine geeignete Auswahl von Deckschicht und Material des Schaumstoffträgers kann so ein für eine weitere Verwendung geeignetes Verbundmaterial hergestellt werden.

Bei einem weiteren bevorzugten Verfahren erfolgt eine Komprimierung sämtlicher Schichten, d. h. insbesondere sowohl der Schaumstoffträgerteile (bzw. dessen vor dem Einbringen des Schnittes noch einteilig vorliegenden Vorläufers) als auch der beiden angeordneten Deckschichten.

Um zu gewährleisten, dass die Trennschicht im Dichtband sich jeweils über die gesamte Dicke erstreckt, ist es meist notwendig, einen oberen und unteren (bezüglich der Dickenrichtung) Streifen abzutrennen, welcher nicht (vollständig entlang der Dickenrichtung) von der Trennschicht durchzogen ist. Ist keine weitere gewinnbringende Verwertung der so abgetrennten Streifen möglich, hat dies den Nachteil, dass die zu entsorgende Abfallmenge vergrößert wird. Daher kann es vorteilhaft sein, mehrere Dichtbänder als in Dickenrichtung übereinanderliegenden Stapel in einem einzigen Verfahren herzustellen und/oder das Dichtband aus mehreren Lagen abgetrennter Streifen herzustellen, wie diese Streifen ggf. untereinander verklebt sein können.

Daher ist in einer bevorzugten Verfahrensvariante vorgesehen, dass in einem nicht komprimierten Zustand in dem Verbund der zusammengeführten Schaumstoffträgerteile n weitere dritte Schnitte eingebracht werden, welche parallel zu einer ersten Oberfläche (also bevorzugt entlang der Längsrichtung (L) und der Breitenrichtung (B)) verlaufen, wobei n mindestens 1 ist. Um einen Stapel aus zwei in Dickenrichtung übereinander angeordneten Dichtbändern herzustellen ist ein einziger dritter Schnitt (n = 1) ausreichend. Der oder die dritten Schnitte sind bevorzugt so angeordnet, dass gleich dicke Dichtbänder entstehen. Der nächstliegende dieser dritten Schnitte ist daher bevorzugt von einer ersten Oberfläche mindestens H_{D}/(n+1) entfernt, wobei H_{D} die Höhe des Schaumstoffträgers in Dickenrichtung ist. Im Fall, dass die erste Oberfläche durch einen zweiten Schnitt entfernt wurde, ist bevorzugt, dass der der durch den zweiten Schnitt erzeugten Oberfläche nächstliegende dritte Schnitt bevorzugt dieser Oberfläche genau H_{D}/(n+1) entfernt ist.

Weiter bevorzugt ist, dass im Fall mehrerer dritter Schnitte (n > 1) die dritten Schnitte zueinander bezüglich der Dickenrichtung äquidistant sind.

Bei einem weiteren bevorzugten Verfahren werden in einem weiteren Verfahrensschritt die miteinander verbundenen Schaumstoffträgerteile geschnitten und bevorzugt wenigstens ein weiterer (zweiter oder vierter) Schnitt in einer Schnittebene erzeugt, der sich in der Dickenrichtung und in der Längsrichtung erstreckt. Bevorzugt erfolgt das Einbringen dieses weiteren (zweiten oder vierten) Schnitts nach dem Aufwickeln des Dichtbandes zu einer komprimierten Dichtbandrolle, weiter bevorzugt zu einer Großrolle.

Bevorzugt steht der wenigstens eine weitere (zweite oder vierte) Schnitt und stehen bevorzugt die mehreren weiteren (zweiten oder vierten) Schnitte, welche letztlich zu den Rollen führen, senkrecht zu dem ersten Schnitt, der den Schaumstoffträger in die Schaumstoffträgerteile trennt.

In einer bevorzugten Verfahrensvariante werden m weitere (zweite oder vierte) Schnitte eingebracht, wobei m mindestens 1 ist und diese weiteren (zweiten oder vierten) Schnitte in einer Ebene verlaufen, welche sich parallel zu der Längenrichtung (L) und der Dickenrichtung (D) erstreckt.

Um zu gewährleisten, dass die Trennschicht das durch den/die weiteren (zweiten oder vierten) Schnitt/e erzeugten Dichtbänder in Dickenrichtung (zumindest nahezu) vollständig durchzieht ist in einer bevorzugten Variante vorgesehen, dass diese weiteren (zweiten oder vierten) Schnitte im Bereich eines minimalen Abstands der Trennschicht von einer ersten Oberfläche oder einer Kreuzungsstelle der Trennschicht mit einer durch einen dritten Schnitt erzeugten Oberfläche angeordnet sind.

Um den Bereich der Kreuzungsstelle/n der Trennschicht mit einer durch einen dritten Schnitt erzeugten Oberfläche zu vergrößern könnte es vorteilhaft sein, dass beim Einbringen des ersten Schnitts in diesem/n Bereich/en das Wellenprofil eine geringere Steigung aufweist und/oder beispielsweise ein Plateau durchläuft. Dies könnte beispielsweise durch eine entsprechende Komprimierung des Schaumstoffträgers vor und/oder während des einbringen des ersten Schnitts erreicht werden.

Unter einem luftdichten Schaumstoff wird im Rahmen der vorliegenden Erfindung verstanden, dass dieser eine Luftdurchlässigkeit von < 50 l/(m²s), bevorzugt < 30 l/(m²s) und besonders bevorzugt von < 10 l/(m²s) aufweist. Die vorgenannten Werte beziehen sich auf Messungen eines Prüfkörpers von 6 mm Dicke, einer Prüffläche von 100 cm² bei einem Differenzdruck von 0,5 mbar an einem Frank-Gerät Typ 21443. Bevorzugt kann so ein Fugendichtband erhalten werden, das den Anforderungen der DIN 18 542, Beanspruchungsgruppe R entspricht.

Bevorzugt wird die imprägnierte Schaumstoffbahn durch die oben genannten Förderrollen transportiert, dabei komprimiert und bevorzugt in der Mitte geschnitten und insbesondere mit einem (Band-)Messer geschnitten. Besonders bevorzugt werden als Fördereinrichtungen Stufenwalzen verwendet, zwischen denen beispielsweise in der Mitte ein Messer verlaufen kann.

Besonders wird bei diesem weiteren (zweiten oder vierten) Schnitt (Schneidvorgang) auch die genannte Trennschicht zwischen den Schaumstoffträgerteilen mitgeschnitten.

Bei einem weiteren bevorzugten Verfahren wird in wenigstens einem weiteren Verfahrensschritt an wenigstens einer Oberfläche eines der beiden Schaumstoffträgerteile eine Klebeschicht angeordnet. Insbesondere wird an genau einem der Schaumstoffträgerteile die Klebeschicht angeordnet. Diese Klebeschicht liegt bevorzugt in einer Ebene, zu welcher die Breitenrichtung und die Längsrichtung des Schaumstoffträgers parallel sind.

Dabei kann bevorzugt diese Klebeschicht an einer Oberfläche bzw. an einer Außenoberfläche entweder des ersten oder des zweiten Schaumstoffträgerteils angeordnet werden und damit insgesamt an einer Oberseite oder Unterseite. Die Klebeschicht könnte auch an einer Oberfläche bzw. an einer Außenoberfläche entweder der ersten oder der zweiten Deckschicht angeordnet werden. Diese Klebeschicht dient bevorzugt zum Ankleben des Dichtbands an eines der beiden Bauteile, zwischen denen das Dichtband angeordnet werden soll.

Bei einem weiteren bevorzugten Verfahren wird der weitere (zweite oder vierte) Schnitt in einem Bereich des Schaumstoffträgers angeordnet, in dem sich die Trennschicht in der Nähe einer der beiden Oberflächen des aus den Schaumstoffträgerteilen gebildeten Verbunds erstreckt. Auf diese Weise, wird erreicht, dass bei dem fertigen Produkt, beispielsweise einer Dichtbandrolle, an einer Seite die besagte Trennschicht entweder nahe an der oberen oder nahe an der unteren Oberfläche liegt. Bevorzugt wird der weitere (zweite oder vierte) Schnitt somit in einem Bereich des Schaumstoffträgers angeordnet, in welchem durch den ersten Schnitt ein Wellenberg oder ein Wellental in der Oberfläche eines Schaumstoffträgerteils oder beider Schaumstoffträgerteile gebildet wurde.

Da die Trennschicht innerhalb des Schaumstoffkörpers insgesamt gekrümmt, beispielsweise wellenförmig und/oder stufenförmig verläuft, wird bevorzugt der weitere (zweite oder vierte) Schnitt derart gesetzt, dass die Trennschicht gewissermaßen von einer Seite, beispielsweise der unteren Oberfläche zu der jeweils gegenüberliegenden Seite, beispielsweise der oberen Oberfläche wandert.

Auf diese Weise kann wie unten genau erläutert ein im Wesentlichen vollständiges Abdichten des Schaumstoffkörpers erreicht werden.

Besonders bevorzugt befindet sich die Trennschicht zumindest abschnittsweise in einem oberen bzw. unteren Drittel des Schaumstoffkörpers, besonders bevorzugt in einem oberen oder unteren Viertel und besonders bevorzugt in einem oberen oder unteren Fünftel des Schaumstoffkörpers.

Besonders bevorzugt werden die weiteren (zweiten oder vierten) Schnitte derart angeordnet, dass in einem Bereich zwischen zwei benachbarten Schnitten die Trennschicht von einem unteren Bereich des Schaumstoffkörpers in einen oberen Bereich des Schaumstoffkörpers verläuft, wobei sich bevorzugt die Schicht nicht geradlinig in der Dickenrichtung erstreckt sondern sowohl gegenüber der Dickenrichtung als auch gegenüber der Breitenrichtung einen schrägen und/oder gekrümmten Verlauf einnimmt.

Die vorliegende Erfindung ist weiterhin auf ein Dichtband nämlich ein als Dichtbandrolle konfektioniertes Schaumstoffband gerichtet, welches einen ersten Schaumstoffträgerteil und einen zweiten Schaumstoffträgerteil aufweist sowie eine Trennschicht, welche zwischen dem ersten Schaumstoffträgerteil und dem zweiten Schaumstoffträgerteil angeordnet ist, wobei sich dieses Schaumstoffband in einer Längenrichtung, einer hierzu senkrechten Breitenrichtung und einer zu der Längenrichtung und der Breitenrichtung senkrechten Dickenrichtung erstreckt, wobei bevorzugt das Schaumstoffband an einer Oberfläche eine Klebeschicht aufweist und diese Oberfläche sich in der Längenrichtung und der Breitenrichtung erstreckt.

Bevorzugt ist diese zwischen den Schaumstoffträgerteilen angeordnete Trennschicht im Wesentlichen oder vollständig luftdicht ausgebildet und kann daher auch als Sperrschicht bezeichnet werden.

Die Trennschicht erstreckt sowohl in der Längenrichtung als auch in der Breitenrichtung als auch in der Dickenrichtung. Dies bedeutet, dass die Trennschicht also nicht nur in einer Ebene verläuft, die parallel zu einer der oben genannten Richtungen ist, sondern, dass sie in allen Richtungen verläuft. Die genannte Trennschicht verläuft zumindest gegenüber der Breitenrichtung zumindest abschnittsweise gekrümmt, nämlich wellenförmig bzw. sinusförmig gekrümmt.

Bevorzugt verläuft die Schicht in der Breitenrichtung von einem unteren n-tel des Schaumstoffbandes in ein oberes n-tel des Schaumstoffbandes, wobei n größer als 3, bevorzugt größer als 4, bevorzugt größer als 5 und besonders bevorzugt größer als 6 ist.

Dabei erstreckt sich bevorzugt die Trennschicht in der Längsrichtung des Dichtbands und verläuft insbesondere auch parallel zu dieser Längsrichtung.

Bevorzugt weist die Trennschicht eine niedrigere Gasdurchlässigkeit auf als die Schaumstoffträgerteile.

In einer weiteren bevorzugten Ausführungsform handelt es sich bei der Trennschicht um eine Folienschicht und/oder um eine Trennschicht die sich aus einer auf wenigstens ein Schaumstoffträgerteil aufgebrachten und insbesondere aufgesprühten Substanz ergibt.

Bevorzugt weist die besagte Trennschicht auch adhäsive Eigenschaften auf.

Besonders bevorzugt liegt diese Trennschicht sowohl an dem ersten Schaumstoffträgerteil als auch an dem zweiten Schaumstoffträgerteil wenigstens teilweise und bevorzugt im Wesentlichen vollständig an. Bevorzugt kann dabei diese Trennschicht an wenigstens einem Schaumstoffträgerteil und bevorzugt an beiden Schaumstoffträgerteilen kleben.

Bei einer weiteren vorteilhaften Ausführungsform sind die Schaumstoffträgerteile aus dem gleichen Material hergestellt.

Besonders bevorzugt verläuft die Trennschicht innerhalb des Schaumstoffkörpers derart, dass sie einen vorgegebenen Winkel mit der Dickenrichtung einschließt, wobei dieser Winkel bevorzugt variiert. Besonders bevorzugt variiert dieser Winkel über die Breitenrichtung hinweg um wenigstens 10° Grad, bevorzugt um wenigstens 20° Grad, bevorzugt um wenigstens 30° Grad.

So ist es möglich, dass etwa an den Randseiten des Dichtbandes der Winkel, den die Trennschicht mit der Dickenrichtung einschließt sehr hoch ist, beispielsweise größer als 70° bevorzugt größer als 80°.

Besonders bevorzugt ist in einem Zentralbereich dieser Winkel wesentlich geringer, d. h. die Trennschicht verläuft in eine Richtung, welche mit der Dickenrichtung einen Winkel einschließt, der kleiner ist als 60° Grad, bevorzugt kleiner als 50° Grad, bevorzugt kleiner als 40° Grad und besonders bevorzugt kleiner als 30° Grad. Dieser Sachverhalt wird unter Bezugnahme auf die Figuren genauer erläutert.

In einer besonders bevorzugten Ausführungsform ist der Bereich der größten Steigung des Verlaufs der Trennschicht gegenüber der Breitenrichtung außermittig angeordnet. Insbesondere ist bevorzugt, dass der Bereich der größten Steigung des Verlaufs der Trennschicht gegenüber der Breitenrichtung gegenüber der Mitte des Dichtbandes in Breitenrichtung zur im Einbauzustand der Rauminnenseite zugewandten Seitenfläche des Dichtbandes hin verschoben ist. Somit kann gewährleistet werden, dass das Dichtband auf der rauminnenseitig angeordneten Hälfte eine größere Dichtigkeit aufweist als auf der raumaußenseitig angeordneten Hälfte.

Besonders bevorzugt verläuft die Trennschicht im Inneren des Schaumstoffkörpers derart, dass sie einen Luftdurchtritt von einer Seitenfläche des Dichtbandes in Richtung der anderen Seitenfläche des Dichtbandes im Wesentlichen (fast vollständig) verhindert.

Bei einer weiteren bevorzugten Ausführungsform handelt es sich bei dem Schaumstoff des Schaumstoffträgerteils um einen Polyurethanschaum und insbesondere um einen imprägnierten Polyurethanschaum. Dabei ist bevorzugt dieser Polyurethanschaum zum Zwecke einer verzögerten Rückstellung imprägniert.

Besonders bevorzugt ist eine Schichtdicke der beiden Schaumstoffträgerteile gemeinsam größer als 2 mm, bevorzugt größer als 4 mm, bevorzugt größer als 6 mm.

Besonders bevorzugt ist die Schichtdicke der beiden Schaumstoffträgerteile gemeinsam kleiner als 500 mm, bevorzugt kleiner als 400 mm, bevorzugt kleiner als 200 mm, bevorzugt kleiner als 150 mm und besonders bevorzugt kleiner als 120 mm und bevorzugt kleiner als 100 mm.

Bei einer weiteren bevorzugten Ausführungsform handelt es sich bei der Trennschicht um eine Folie insbesondere eine Kunststofffolie. Diese kann besonders bevorzugt mit mindestens einem Schaumstoffträgerteil über ein Klebemittel verbunden sein und besonders bevorzugt kann sie mit einem Schaumstoffträgerteil klebend verbunden sein, sodass die Trennschicht auch die beiden Schaumstoffträgerteile zusammenhält.

Vorteilhaft weist diese Trennschicht eine Dicke auf, die größer ist als 5 µm, bevorzugt größer als 7 µm, bevorzugt größer als 10 µm und besonders bevorzugt größer als 15 µm. Besonders bevorzugt weist diese Trennschicht eine Dicke auf, die kleiner ist als 800 µm, bevorzugt kleiner als 700 µm, bevorzugt kleiner als 600 µm, bevorzugt kleiner als 500 µm, bevorzugt kleiner als 300 µm, bevorzugt kleiner als 200 µm und besonders bevorzugt kleiner als 100 µm.

Bevorzugt ist die Trennschicht flexibel und/oder dehnbar ausgeführt.

Besonders bevorzugt weist der Schaumstoff ein Raumgewicht auf, welches in einem nicht imprägnierten Zustand größer ist als 20 kg/m³, bevorzugt größer als 25 kg/m³. Besonders bevorzugt weist der Schaumstoff in einem nicht imprägnierten Zustand ein Raumgewicht auf, welches kleiner ist, als 80 kg/m³, bevorzugt kleiner als 70 kg/m³, bevorzugt kleiner als 60 kg/m³, bevorzugt kleiner als 50 kg/m³ und besonders bevorzugt kleiner als 40 kg/m³.

Bevorzugt bewirkt das Imprägnat eine Raumgewichtszunahme, um mehr als 10 kg/m³, bevorzugt mehr als 20 kg/m³ und bevorzugt mehr als 30 kg/m³. Besonders bewirkt das Imprägnat ein Raumgewichtszunahme, welche kleiner ist als 300 kg/m³, bevorzugt kleiner als 200 kg/m³ und besonders bevorzugt kleiner als 100 kg/m³.

Bei der oben genannten Trennschicht, die zwischen den Schaumstoffträgern angeordnet ist, kann es sich beispielsweise um eine Stretchfolie handeln, wie etwa eine PE-Stretchfolie oder auch eine dünne PVC-Folie und/oder auch eine feuchtevariable Polyolefinfolie. Daneben können anstelle einer Folie auch (Klebe-) Materialien aus Kautschuk, Acrylharz, generell filmbildende Kunststoffe und dergleichen verwendet werden.

Besonders bevorzugt ist das Dichtband so gestaltet, dass in einem montierten Zustand die Trennschicht zwischen den Schaumstoffträgerteilen einen Luftdurchtritt (insbesondere in Breitenrichtung des Dichtbandes) im Wesentlichen verhindert.

Bei einer bevorzugten Ausführungsform sind durch die Trennschicht die beiden Schaumstoffträgerteile vollständig voneinander getrennt.

Bevorzugt ist an einer Außenoberfläche des Verbundes der beiden Schaumstoffträgerteile eine Klebeschicht und insbesondere eine Selbstklebeschicht angeordnet. Bevorzugt erstreckt sich dabei diese Klebeschicht in der Längsrichtung und der Breitenrichtung des Dichtbandes. Insbesondere dient diese Klebeschicht zum Befestigen des Dichtbandes an einem Baukörper.

Bei einer weiteren bevorzugten Ausführungsform ist an wenigstens einem Schaumstoffträgerteil zusätzlich zu der Trennschicht und der Klebeschicht noch eine weitere Schicht, bevorzugt eine Deckschicht, angeordnet. Diese Deckschicht kann dabei ebenfalls aus einem Schaumstoff bestehen. Besonders bevorzugt handelt es sich hierbei um einen Schaumstoff, der eine geringere Luftdurchlässigkeit aufweist als der oben erwähnte Schaumstoff und der insbesondere luftdicht ausgebildet sein kann.

Durch diese Deckschicht, durch die sich vorteilhaft die Klebeschicht nicht erstreckt, kann dabei in effektiver Weise ein Durchgang von Luft verhindert werden. Die Trennschicht erstreckt sich bis in die Deckschicht hinein.

Bevorzugt handelt es sich bei der Deckschicht um einen Schaumstoff. Vorteilhaft ist, dass bei der Herstellung wenigstens eine weitere Schaumstoffbahn als Deckschicht an dem Schaumstoffträger und insbesondere an einer seiner Ober- bzw. Unterseiten angebracht wird. Wie erwähnt kann es sich hierbei um einen luftdichten Schaumstoff handeln. Insbesondere ist bevorzugt, dass der Schaumstoff der mindestens einen Deckschicht und der Schaumstoff der Schaumstoffträgerteile verschieden ist.

In einer weiteren vorteilhaften Ausführungsform ist auch an dem jeweils anderen Schaumstoffträgerteil eine Deckschicht angeordnet. Bevorzugt sind dabei diese erste Schicht und die zweite Schicht dermaßen angeordnet, dass die beiden Schaumstoffträgerteile insbesondere in der Dickenrichtung des Dichtbandes zwischen diesen beiden Deckschichten angeordnet sind. Auch diese zweite Deckschicht ist in der gleichen Weise ausgestaltet wie die oben erwähnte erste Deckschicht. Damit handelt es sich bei dieser Deckschicht bevorzugt ebenfalls um eine Schaumstoffschicht und/oder eine im Wesentlichen luftdichte Deckschicht Bevorzugt weist die erste Deckschicht einen möglichst geschlossenzelligen und bevorzugt möglichst luftundurchlässigen Schaumstoff auf. Dieser hat neben der Luftdichtigkeit die Aufgabe sich möglichst gut an die häufig vorkommenden mineralischen Untergründe eines Baukörpers anzupassen. Dabei ist es möglich, dass diese erste Deckschicht bzw. dieser Schaumstoff imprägniert ist. Dies ist jedoch nicht unbedingt erforderlich.

Die zweite Deckschicht weist bevorzugt einen möglichst geschlossenzelligen und/oder möglichst luftundurchlässigen Schaumstoff auf. Es ist aber auch möglich, dass die beiden Deckschicht gleichermaßen aufgebaut bzw. identisch sind. Auch diese zweite Deckschicht bzw. der betreffende Schaumstoff muss nicht imprägniert sein.

Bevorzugt ist auf der Außenseite dieser Deckschicht die oben erwähnte Klebeschicht, bevorzugt als Selbstklebung, als Montagehilfe angebracht. Diese Produktseite weist in der Anwendung zu dem Bauelement, beispielsweise einem Fensterrahmen oder dergleichen.

Vorteilhaft ist auch die genannte Deckschicht aus einem Schaumstoff hergestellt. Dieser Schaumstoff kann dabei aus einer Gruppe von Schaumstoffen ausgewählt sein, welche PVC-Schaum, PE-Schaum, EPDM-Schaum, Neoprenschaum und dergleichen enthält.

Vorzugsweise weist die mindestens eine Deckschicht eine Schichtdicke auf, die größer ist als 0,5 mm bevorzugt größer als 1 mm, bevorzugt größer als 2 mm.

Bevorzugt weist die mindestens eine Deckschicht eine Schichtdicke auf, die kleiner ist als 30 mm, bevorzugt kleiner als 20 mm, bevorzugt kleiner als 15 mm, bevorzugt kleiner als 10 mm und besonders bevorzugt kleiner als 6 mm.

Wie erwähnt ist wenigstens eine der Deckschichten und sind bevorzugt beide Deckschichten aus einem luftdichten Material und insbesondere einem luftdichten Schaumstoff hergestellt.

In einer bevorzugten Ausführungsform ist vorgesehen, dass wenigstens an der ersten Oberfläche eine Deckschicht oder allgemein ein Element aus einem im Wesentlichen luftundurchlässigen Schaumstoff angeordnet ist.

Denkbar wäre jedoch auch, dass die Deckschichten nicht oder lediglich zeitweise mit dem Schaumstoffträger verbunden sind. Sie bilden somit Hilfsschichten, die bevorzugt vor der Profilierung dem Schaumstoffträger zugeführt werden, um dessen Profilierung zu unterstützen. Insbesondere beabstanden sie den Schaumstoffträger von den Walzen und ermöglichen so das Schneiden mit der oben beschriebenen Schneidevorrichtung in einem gewissen Abstand von den Walzen. Nach der Profilierung können die Hilfsschichten entfernt und wiederverwendet werden.

In einer weiteren bevorzugten Ausführungsform ist vorgesehen, dass der Schaumstoffträger in einer größeren Dicke als das herzustellende Dichtband bereitgestellt wird. Nach der teilweisen Komprimierung durch die oben beschriebenen Walzen und dem Schneiden in die zwei Schaumstoffträgerteile durch die Schneideeinrichtung erhält man so profilierte Schaumstoffträgerteile mit einer größeren Dicke als notwendig. Dies hat den Vorteil, dass auch im Bereich der jeweils im Schaumstoffträgerteil vorhandenen und bei dem oben beschriebenen Schneidevorgang eingebrachten Wellentäler ein vergleichsweise starker Schaumstoffteil bestehen bleibt. Dieser kann die ausreichende Stabilität des Schaumstoffträgerteils gewährleisten und beispielsweise die Gefahr des Zerreißens während des Transports verringern. Erst in einem folgenden Verfahrensschritt, bevorzugt nach dem Verbinden der beiden Schaumstoffträgerteile mit der Trennschicht, wird der mindestens einseitig zwischen dem mindestens einen Wellental und der Schaumstoffträgerteiloberfläche bestehende Schaumstoffteil abgeschnitten, so dass das jeweilige Wellental nun (zumindest nahezu) die durch den Schneidevorgang neu geschaffene Oberfläche kontaktiert. Die abgetrennten Schaumstoffteile können wiederverwertet werden.

In einer alternativen oder ergänzenden Ausgestaltung erstreckt sich das Dichtband zum Abdichten von Baukörpern in einer Längsrichtung und in einer zu der Längsrichtung senkrechten Breitenrichtung. Weiterhin weist das Dichtband eine erste Oberfläche auf, welche sich zumindest im Wesentlichen in der Längsrichtung und in der Breitenrichtung erstreckt sowie eine zweite Oberfläche, welche sich ebenfalls in der Längsrichtung und der Breitenrichtung erstreckt und welche von der ersten Oberfläche beabstandet ist und insbesondere auch parallel zu der ersten Oberfläche ist. Bei diesem Dichtband dienen die erste Oberfläche und die zweite Oberfläche jeweils zur Anlage an die Baukörper (und insbesondere an unterschiedliche Baukörper), wobei das Dichtband wenigstens einen Schaumstoffkörper aufweist, sowie ein Trennelement, welches sich wenigstens teilweise von der ersten Oberfläche zu der zweiten Oberfläche erstreckt und welches dazu geeignet und bestimmt ist, einen Durchtritt eines fließfähigen Mediums durch das Dichtband hindurch zumindest zu behindern. Bei dieser Variante ist vorgesehen, dass wenigstens an der ersten Oberfläche eine Schicht oder allgemein ein Element aus einem im Wesentlichen luftundurchlässigen Schaumstoff angeordnet ist.

Eine solche Schicht (oben auch als Deckschicht bezeichnet) oder allgemein ein solches Element aus einem im Wesentlichen luftundurchlässigen Schaumstoff könnte - wie oben bereits beschrieben - in einer bevorzugten Ausführungsform auch an einer (bevorzugt zur Anlage an einen Baukörper vorgesehenen) (ersten) Oberfläche eines wie zuvor beschriebenen Dichtbandes vorgesehen sein. Es wird daher darauf hingewiesen, dass sämtliche nachfolgenden Merkmale auch mit den oben bezüglich der ersten Alternative beschriebenen Merkmalen kombiniert werden können.

Bei einer bevorzugten Ausführungsform ist das Trennelement dazu geeignet und bestimmt, einen Durchtritt eines fließfähigen Mediums durch das Dichtband im Wesentlichen zu verhindern und bevorzugt zu verhindern.

Bei einer weiteren bevorzugten Ausführungsform bedeckt die Schicht die Oberfläche an der sie angeordnet ist zu mehr als 30 %, bevorzugt zu mehr als 50 % bevorzugt zu mehr als 70 %, bevorzugt zu mehr als 80 %, bevorzugt zu mehr als 90 % und besonders bevorzugt im Wesentlichen vollständig.

Es wäre jedoch auch denkbar, dass als Schicht nur ein vergleichsweise dünnes Band an der Oberfläche angebracht wird, welches entsprechend auch nur einen geringen Bereich von 10 % oder noch weniger abdeckt.

Bei einer bevorzugten Ausführungsform ist das Trennelement eine Trennschicht ist, welche sich wenigstens abschnittsweise von der ersten Oberfläche zu der zweiten Oberfläche erstreckt. Dabei ist es möglich, dass diese Trennschicht an einer Außenoberfläche des Schaumstoffkörpers angeordnet ist, es wäre jedoch auch möglich und bevorzugt, dass die Trennschicht im Inneren des Schaumstoffkörpers angeordnet ist und/oder dort verläuft.

Bei einer weiteren vorteilhaften Ausführungsform weist der Schaumstoffkörper einen ersten Schaumstoffkörperabschnitt und einen zweiten Schaumstoffkörperabschnitt auf, die durch die Trennschicht wenigstens abschnittsweise voneinander getrennt sind. Dabei ist es möglich, dass diese Abschnitte vollständig voneinander getrennt sind, es wäre jedoch auch denkbar, dass diese Abschnitte über einen Verbindungsabschnitt miteinander verbunden sind.

Bei einer weiteren vorteilhaften Ausführungsform ist der erste Schaumstoffkörperabschnitt ein erster Schaumstoffkörper und der zweite Schaumstoffkörperabschnitt ein zweiter Schaumstoffkörper und die Trennschicht trennt diese Schaumstoffkörper im Wesentlichen vollständig.

Es wäre jedoch auch denkbar, dass in dem Schaumstoffkörper ein Schlitz angeordnet ist und die Trennschicht innerhalb dieses Schlitzes verläuft.

Vorteilhaft handelt es sich bei dieser Schicht (die an der ersten Oberfläche angeordnet ist) um eine flexible Schicht. Besonders bevorzugt ist diese Schicht flächig an der jeweiligen Oberfläche und insbesondere an den Oberflächen beider Schaumstoffkörper angeordnet. Diese weitere luftdichte Schicht wird besonders bevorzugt in einem Einbauzustand an den Baukörpern angepresst. Dabei ist es möglich und bevorzugt, dass die Trennschicht an dieser Schicht bzw. Schaumstofflage anschließt und auf diese Weise insbesondere auch mit Hilfe der Schaumstofflage die Kontaktfläche zu dem jeweiligen Baukörper erhöht wird.

Bei einer bevorzugten Ausführungsform ist das Dichtband sandwichartig aufgebaut und kann beispielsweise einen festeren und luftdichten Schaumstoffboden aufweisen, der zwischen einer Montageselbstklebung und dem jeweiligen Multifunktionsband angeordnet ist.

Bei einer weiteren vorteilhaften Ausführungsform weist der Schaumstoff in einem vollständig rückgestellten Zustand ein Raumgewicht auf, welches wenigstens 30 kg/m³, bevorzugt wenigstens 40 kg/m³, und besonders bevorzugt wenigstens 50 kg/m³ beträgt.

Bei einer weiteren vorteilhaften Ausführungsform weist der Schaumstoff in einem vollständig rückgestellten Zustand ein Raumgewicht auf, welches höchstens 250 kg/m³, bevorzugt höchstens 200 kg/m³, und besonders bevorzugt höchstens 150 kg/m³ beträgt.

Bei einer weiteren vorteilhaften Ausführungsform ist das Material des ersten Schaumstoffkörpers und/oder das Material des zweiten Schaumstoffkörpers oder allgemein, falls nur ein Schaumstoffkörper vorhanden ist, offenporig ausgebildet.

Bei einer weiteren vorteilhaften Ausführungsform weist die weitere Schicht bzw. die luftundurchlässige Schicht ein Raumgewicht auf, welches wenigstens 5 kg/m³, bevorzugt wenigstens 7 kg/m³, und besonders bevorzugt wenigstens 10 kg/m³ beträgt.

Bei einer weiteren vorteilhaften Ausführungsform weist die weitere Schicht bzw. die luftundurchlässige Schicht ein Raumgewicht auf, welches höchstens 100 kg/m³, bevorzugt höchstens 70 kg/m³, und besonders bevorzugt höchstens 50 kg/m³ beträgt.

Bei einer weiteren vorteilhaften Ausführungsform handelt es sich bei dem Material der Schaumstoffkörper um einen PU-Schaumstoff.

Besonders bevorzugt handelt es sich bei der Trennschicht um eine Trennfolie. Es kann jedoch auch eine Trennschicht aus einer Klebeschicht bzw. aus einem Klebstoff gebildet sein.

Bei einer weiteren vorteilhaften Ausführungsform weist die Trennschicht eine Dicke auf, welche größer ist als 2 µm, bevorzugt größer als 4 µm, bevorzugt größer als 6 µm, bevorzugt größer als 8 µm und besonders bevorzugt größer als 10 µm.

Bei einer weiteren vorteilhaften Ausführungsform weist die Trennschicht eine Dicke auf, die geringer ist als 400 µm, bevorzugt geringer als 300 µm, bevorzugt geringer als 200 µm.

Besonders bevorzugt ist die Trennschicht mittels eines Klebstoffs an wenigstens einem Schaumstoffkörper befestigt. Bei diesem Klebstoff handelt es sich besonders bevorzugt um einen Acrylat-basierten Klebstoff. Es könnte jedoch auch ein Kautschuk basierter Klebstoff Anwendung finden. Auch könnten andere Selbstklebematerialien Anwendung finden.

Bei einer weiteren vorteilhaften Ausführungsform ist die Trennschicht eine flüssigkeitsdichte Trennschicht. Auf diese Weise kann das Durchtreten von Flüssigkeit und/ oder Dampf durch die besagte Schicht verhindert (bzw. im Fall von Dampf gebremst werden.

Bei einer weiteren vorteilhaften Ausführungsform ist die Trennschicht an dem ersten Schaumstoffkörper und/ oder dem zweiten Schaumstoffkörper befestigt. Besonders bevorzugt ist die Trennschicht an beiden Schaumstoffkörpern und/oder Schaumstoffkörperabschnitten befestigt. Bei einer weiteren vorteilhaften Ausführungsform ist die Trennschicht an wenigstens einen der beiden Schaumstoffkörper und/oder Schaumstoffkörperabschnitt angeklebt. Besonders bevorzugt ist die Trennschicht an dem besagten Schaumstoffkörper und/oder Schaumstoffkörperabschnitt flächig angeklebt.

Bei einer weiteren vorteilhaften Ausführungsform ist wenigstens an der weiteren (bevorzugt der zweiten oder vierten) Oberfläche, das heißt insbesondere derjenigen Oberfläche, die der genannten ersten Oberfläche gegenüberliegt, eine Klebeschicht angeordnet. Dabei kann es sich beispielsweise um eine Montageselbstklebeschicht handeln. Auf diese Weise kann das Dichtband an einem Baukörper befestigt werden. Besonders bevorzugt schließt sich die Trennschicht an die besagte weitere Schicht an und auf diese Weise kann mit Hilfe dieser Schaumstofflage die Kontaktfläche zum Baukörper erhöht werden.

Bei einer weiteren vorteilhaften Ausführungsform sind der erste Schaumstoffkörper und/oder der zweite Schaumstoffkörper (bzw. der Schaumstoffkörper und/oder der erste und der zweite Schaumstoffkörperabschnitt aus einem imprägnierten und/oder rückstellfähigen Schaumstoff hergestellt. Bevorzugt ist die weitere Schicht nicht imprägniert bzw. rückstellfähig.

Das Schaumstoffband ist als Dichtbandrolle konfektioniert und es ist möglich, dass nach dem Abrollen sich der Schaumstoff rückstellt und insbesondere auch in dem abzudichtenden Bereich rückstellt.

Bei einer weiteren vorteilhaften Ausführungsform ist die Schicht aus einem geschlossenporigen Schaumstoff hergestellt. Auf diese Weise wird insbesondere auch eine Luftdichtigkeit erreicht.

Generell wird die Kontaktfläche mit Hilfe der baukörperseitigen luftdichten Schaumstofflage stark vergrößert (verglichen mit der Kante einer Membran).

Ein weicher, an Unebenheiten anpassungsfähiger luftdichter Schaum schließt sich besser an die Bauoberfläche an. Er ist bevorzugt luftdicht mit der Innenliegenden Membran verbunden.

Profilseitig bildet die Schaumstofflage Vorteile. So können beispielsweise Stege überbrückt werden und es kann ein unkontrolliertes Aufquellen zwischen Nuten und Stegen verhindert werden. Daneben lässt die zusätzliche Schicht auch keine Luftumwanderung der Membran an der Profilseite zwischen den besagten Stegen zu.

Bei einer weiteren bevorzugten Ausführungsform weist die Schicht eine geringere Dicke auf, als der Schaumstoffkörper. Dabei weist die Schicht insbesondere in einem rückgestellten Zustand des Schaumstoffkörpers eine geringere Dicke auf als dieser Schaumstoffkörper. Besonders bevorzugt beträgt die Dicke dieser Schicht höchstens 50 % der Dicke des Schaumstoffkörpers, bevorzugt höchstens 40 %, bevorzugt höchstens 30 %, bevorzugt höchstens 20 % und besonders bevorzugt höchstens 10 %.

Die Trennschicht erstreckt sich auch in der Dickenrichtung des Dichtbandes. Die Trennschicht verläuft in der Breitenrichtung wellenförmig und somit zumindest abschnittsweise schräg zwischen den Schaumstoffkörpern und erstreckt sich somit auch in der Breitenrichtung des Dichtbandes.

Bei einer weiteren vorteilhaften Ausführungsform weist das Dichtband mehrere Schaumstoffkörper auf, die besonders bevorzugt jeweils durch Trennschichten voneinander getrennt sind. So können beispielsweise drei Schaumstoffkörper vorhanden sind, die durch zwei derartige Trennschichten getrennt sind. Dabei können diese Trennschichten im Wesentlichen parallel zueinander verlaufen.

Bei einer weiteren vorteilhaften Ausführungsform erstreckt sich in einem vollständig rückgestellten Zustand der Schaumstoffkörper die Trennschicht in der Dickenrichtung über einen geringeren Bereich als die Schaumstoffkörper. Besonders bevorzugt handelt es sich hierbei um einen geringfügig geringeren Bereich. So können beispielsweise in den Bereichen, in denen die Trennschicht endet, im Bereich des Schaumstoffkörpers in dem rückgestellten Zustand Mulden ausgebildet sein. Im Bereich dieser Mulde liegt bevorzugt die oben erwähnte Schicht an und bewirkt so eine höhere Dichtigkeit.

Zum Beispiel ist weiterhin eine Bauanordnung mit einem ersten Baukörper und einem zweiten Baukörper vorgesehen, wobei wenigstens abschnittsweise zwischen diesen Baukörpern ein Dichtband der oben beschriebenen Art angeordnet ist.

Vorteilhaft handelt es sich bei der Bauanordnung um eine Zusammensetzung aus einem Fenster bzw. einem Fensterrahmen und den daran anschließenden Teil des Gebäudes. Daneben kann die Erfindung aber auch auf Türen, Türrahmen und Fassadenprofile Anwendung finden. Auf diese Weise dichtet das hier beschriebene Dichtband insbesondere die Abstände zwischen einem Fenster bzw. Fensterrahmen und dem entsprechenden Gebäudeteil, beispielsweise einem Mauerwerk ab (bzw. einer Tür bzw. einem Türrahmen und einem Fassadenprofil.

Die vorliegende Erfindung bezieht sich weiterhin auf ein Verfahren zum Herstellen eines Dichtbandes nach Anspruch 1. Dabei wird zunächst ein erster Schaumstoffkörper zur Verfügung gestellt. Bevorzugt wird dieser Schaumstoffkörper mit einem Trennelement versehen, welches eine Durchtritt eines fließfähigen und insbesondere gasförmigen Mediums durch das Dichtband zumindest behindert (d. h. insbesondere mehr behindert als der Schaumstoffkörper)

Der erste Schaumstoffkörper wird mit einem zweiten Schaumstoffkörper verbunden, wobei zwischen dem ersten Schaumstoffkörper und dem zweiten Schaumstoffkörper eine Trennschicht angeordnet wird. Dies erfolgt nach dem in den Ansprüchen definierten Verfahren.

In einem weiteren Verfahrensschritt wird an einer Oberfläche des ersten Schaumstoffkörpers und des zweiten Schaumstoffkörpers eine weitere Schicht angeordnet. Insbesondere handelt es sich hierbei um eine Oberfläche, welche zur Anlage an einen der Baukörper dient.

Insbesondere handelt es sich bei dieser weiteren Schicht um eine Schaumstoffschicht.

Bevorzugt verläuft damit diese weitere Schicht parallel zu dem ersten Schaumstoffkörper und/oder dem zweiten Schaumstoffkörper.

Bevorzugt handelt es sich bei dieser Schicht um eine flexible Schicht. Besonders bevorzugt handelt es sich bei dieser weiteren Schicht um eine im Wesentlichen luftdichte Schicht.

Bei einem weiteren bevorzugten Verfahren werden die Schaumstoffkörper aneinander befestigt. Dabei ist es möglich, dass die besagte Trennschicht an dem ersten Schaumstoffkörper angeklebt wird und dann auch der zweite Schaumstoffkörper an dieser Schicht angeklebt wird. So ist es beispielsweise möglich, dass die Trennschicht als doppelseitig klebend ausgeführt ist.

Bei einem weiteren bevorzugten Verfahren werden die Schaumstoffkörper imprägniert. Besonders bevorzugt werden die Schaumstoffkörper imprägniert, bevor sie mit der besagten Trennschicht aneinander geführt werden.

Bei einer weiteren vorteilhaften Ausführungsform wird eine Klebeschicht an die gegenüberliegende Oberfläche bezüglich der ersten Schicht der Schaumstoffkörper angeordnet. Auf diese Weise können die Schaumstoffkörper zwischen der Klebeschicht und der oben erwähnten Schicht gesandwiched sein.

Es wäre jedoch auch möglich, dass zusätzlich zu der genannten Schicht noch eine weitere Schaumstoffschicht an den Schaumstoffkörpern angeordnet wird. So ist es möglich, dass die Schaumstoffkörper zwischen zwei weiteren Schichten und insbesondere Schaumstoffschichten sandwichartig angeordnet sind.

Weitere Vorteile und Ausführungsformen ergeben sich aus den beigefügten Zeichnungen:
Darin zeigen:
- Fig. 1: eine Anordnung nach internem Stand der Technik zum Herstellen eines Dichtbands;
- Fig. 2: eine Darstellung zur Veranschaulichung der Funktionsweise der in Fig. 1 gezeigten Anordnung;
- Fig. 3: eine Darstellung eines nach dem internen Stand der Technik der Anmelderin herzustellenden Dichtbandes;
- Fig. 4: eine Darstellung eines nach dem internen Stand der Technik der Anmelderin hergestellten Dichtbandes;
- Fig. 5: eine weitere Darstellung zur Veranschaulichung eines Herstellungsprozesses;
- Fig. 6: eine Schnittdarstellung eines Verfahrensproduktes nach einem Verfahren nach dem internen Stand der Technik der Anmelderin;
- Fig. 7: eine Darstellung zur Veranschaulichung der Problematik beim internen Stand der Technik der Anmelderin;
- Fig. 8:: Eine Darstellung zur Herstellung eines Dichtungsbandes gemäß einer Ausgestaltung der Erfindung;
- Fig. 9: eine Darstellung eines Dichtungsbandes;
- Fig.10: eine Darstellung zur Veranschaulichung von Charakteristika eines Dichtungsbandes;
- Fig. 11: eine Darstellung eines Verfahrens zur Herstellung eines Dichtungsbandes;
- Fig. 12: eine Darstellung eines in dem Verfahren gemäß Fig. 11 hergestellten Dichtungsbandes;
- Fig. 13: eine Schnittdarstellung eines Zwischenprodukts einer bevorzugten Verfahrensvariante;
- Fig. 14: eine schematische Darstellung einer bevorzugten Verfahrensvariante;
- Fig. 15: eine schematische Darstellung einer weiteren bevorzugten Verfahrensvariante;
- Fig. 16: eine Dichtbandanordnung nach dem Stand der Technik;
- Fig. 17: eine Dichtbandanordnung in einem Montagezustand; und
- Fig. 18: eine weitere Darstellung einer bevorzugten Dichtbandanordnung.

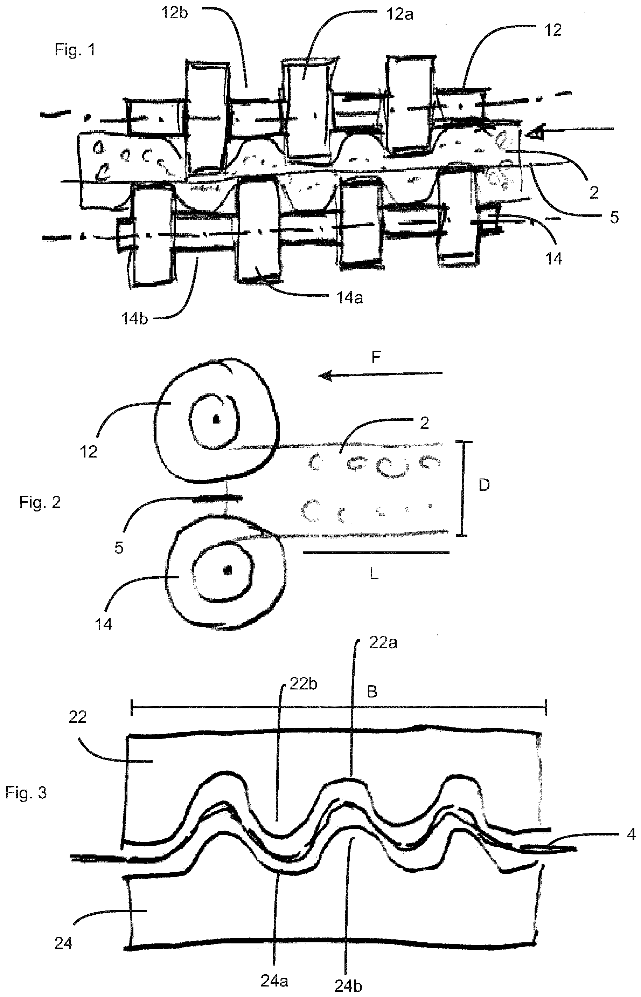

Figur 1 zeigt eine schematische Darstellung einer Vorgehensweise zum Herstellen eines Dichtungsbandes. Dabei ist eine erste Förderrolle bzw. Förderwalze 12 vorgesehen sowie eine zweite Förderrolle bzw. Förderwalze 14. Ein Schaumstoffträger 2 wird zwischen diesen beiden Walzen gefördert. Man erkennt, dass die Förderwalze 12 Abstandseinstelleinrichtungen hier Vorsprünge beispielsweise zusätzliche Scheiben 12a aufweist und zwischen diesen Scheiben 12a jeweils Ausnehmungen 12b gebildet werden.

Entsprechend weist die Förderwalze 14 ebenfalls Vorsprünge bzw. Scheiben 14a auf, sowie auch dazwischen angeordnete Ausnehmungen 14b. Die beiden Förderwalzen 12 und 14 sind derart bezüglich einander (entlang deren Längsrichtung bzw. der Breitenrichtung des Schaumstoffträgers) versetzt, dass jeweils die Vorsprünge 12a der Förderwalze 12 in die Ausnehmungen 14b eingreifen bzw. diesen zumindest gegenüberliegen.

Auf diese Weise wird der Schaumstoffträger 2, wie in Fig. 1 gezeigt, wellenartig gefördert. Das Bezugszeichen 5 kennzeichnet ein Schneidmesser, welches den Schaumstoff während des Förderns durch die Walzen oder Rollen oder auch danach schneidet. Damit wird hier die imprägnierte Schaumbahn bzw. der Schaumstoffträger 2 (in Fig. 1) aus der Figurenebene herauskommen und durch die Rollen 12, 14 transportiert, dabei komprimiert und hier bevorzugt in seiner Mitte mit dem Schneideelement 5 geschnitten.

Figur 2 zeigt eine weitere Darstellung eines in der Pfeilrichtung F geförderten Schaumstoffträgers 2. Dieser weist dabei eine Längsrichtung L auf sowie auch eine Dickenrichtung D. Die Breitenrichtung B ist in der Fig. 2 nicht gezeigt und erstreckt sich hier senkrecht zur Figurenebene. Damit wird ein Schnitt in den verformten Schaumstoffträger eingebracht, der sich einerseits in der Breitenrichtung B erstreckt und andererseits durch die Förderung des Schaumstoffes 2 in der Förderrichtung F und damit auch in der Längsrichtung L.

Wie sich aus Fig.1 und Fig. 2 ergibt werden hier dazu Stufenrollen verwendet, welche für die wellenartige Komprimierung des Schaumstoffs sorgen. Damit sind auch in Fig. 2 oben und unten Stufenwalzen 12, 14 dargestellt und in der Mitte läuft ein Schneidmesser hindurch. Wie oben erwähnt, handelt es sich bei dem Schaumstoffträger um einen aus dem Stand der Technik an sich bekannten und bevorzugt imprägnierten Schaumstoffträger. Dabei wurde der Schaumstoffträger vorteilhaft bereits vor dem Schneid- und Fördervorgang imprägniert.

Fig. 3 zeigt einen weiteren Verfahrensschritt zur Herstellung eines Dichtbandes. Nach der Komprimierung (durch die Walzen bzw. Rollen 12, 14, dem Schnitt und bevorzugt einer nachfolgenden Dekomprimierung des geschnittenen Schaumstoffs werden nunmehr wellenförmige Schaumstoffträgerteile 22 und 24 erhalten. Der Schaumstoffträgerteil 22 und bevorzugt auch der Schaumstoffträgerteil 24, weist hier "Bergbereiche" 22b bzw. 24b und "Talbereiche" 22a bzw. 24a auf. In den durch den Schnitt zwischen den Schaumstoffträgerteilen 22 und 24 eingebrachten Zwischenraum wird eine Trennschicht wie hier eine Sperrschicht eingelegt.

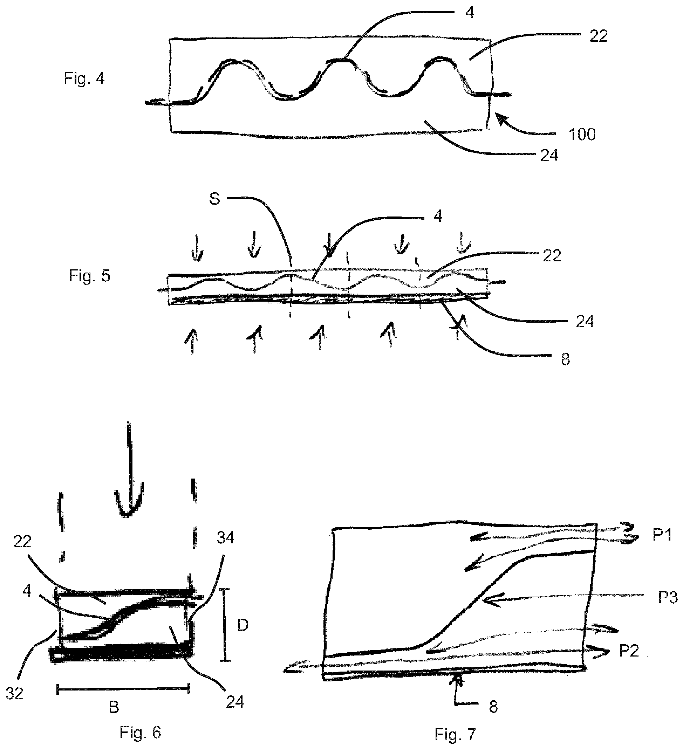

Entsprechend den "Bergbereichen" 22b und "Talbereichen" 22a weist somit auch das Schaumstoffträgerteil 24 "Talbereiche" 24a und "Bergbereiche" 24b auf. Doch auch die jeweiligen "Talbereiche" sind hinsichtlich ihres Abstandes zu der unteren Oberfläche 36 bzw. oberen Oberfläche 38 der jeweiligen Schaumstoffträgerteile zu dick und entsprechend kann das Problem aufkommen, dass die eingelegte Folie nur unzureichend das spätere Produkt verschließt bzw. für eine ausreichende Luftdichtigkeit sorgt (die Luft oberhalb und/oder unterhalb der Folie oder allgemein des Dichtelements vorbeiströmen kann, wie unten mit Bezug auf Figur 7 genauer beschrieben ist.

Fig. 4 zeigt eine Darstellung eines entsprechenden Dichtbandes 100 mit eingelegter Folie 4. Die Schaumstoffträgerteile 22 und 24 sind aufeinander zugestellt, so dass sie an der Trennschicht 4 anliegen. Bevorzugt sind sie jeweils mit der Trennschicht 4 verklebt. Auch hier erkennt man wiederum, dass oberhalb der jeweiligen Maxima und Minima des Dichtbandverlaufs große Abstände zu den jeweiligen Unter- und Oberseiten 36 und 38 des Dichtbands bestehen.

In einem weiteren Arbeitsschritt, der in Fig. 5 gezeigt ist, wird das so gefertigte Band wiederum komprimiert und bevorzugt mit einer Selbstklebung 8 versehen. Auf diese Weise entsteht ein sogenannter Dock. Die Pfeile in Fig. 5 deuten dabei die Komprimierung des Schaumstoffträgers in der Dickenrichtung D an.

Fig. 6 zeigt eine Darstellung des nach dem internen Stand der Technik der Anmelderin hergestellten Dichtbandprodukts.

Man erkennt hier die beiden Schaumstoffträgerteile 22 und 24 sowie das Dichtelement bzw. die Trennschicht 4, die zwischen diesen Schaumstoffträgerteilen 22 und 24 verläuft.

Die Bezugszeichen 32 und 34 beziehen sich auf Seitenflächen des Dichtbandes, die in einem montierten Zustand des Dichtbands zur Raumaußenseite bzw. Rauminnenseite weisen.

Man erkennt, dass über die Breite B des Dichtbands hinweg die Schicht nicht horizontal verläuft, sondern in der Dickenrichtung sich nach oben erstreckt.

Fig. 7 zeigt die Problematiken eines entsprechenden Dichtbandes im Stand der Technik. Man erkennt, dass Luft zwar in einem Zentralbereich des Dichtbandes (wie durch den Pfeil P3 veranschaulicht) nicht durch das Dichtband hindurchtritt, aber gleichwohl noch Luftnebenwege, wie durch die Pfeile P1 und P2 angedeutet, existieren. Insbesondere in dem Talbereich des Dichtstreifens existiert ein Bereich aus imprägniertem Schaumstoff, der immer noch zu viel Luft durchlässt. Das Bezugszeichen 8 kennzeichnet eine Selbstklebeschicht, mit der das Dichtband an einem Baukörper befestigt werden kann.

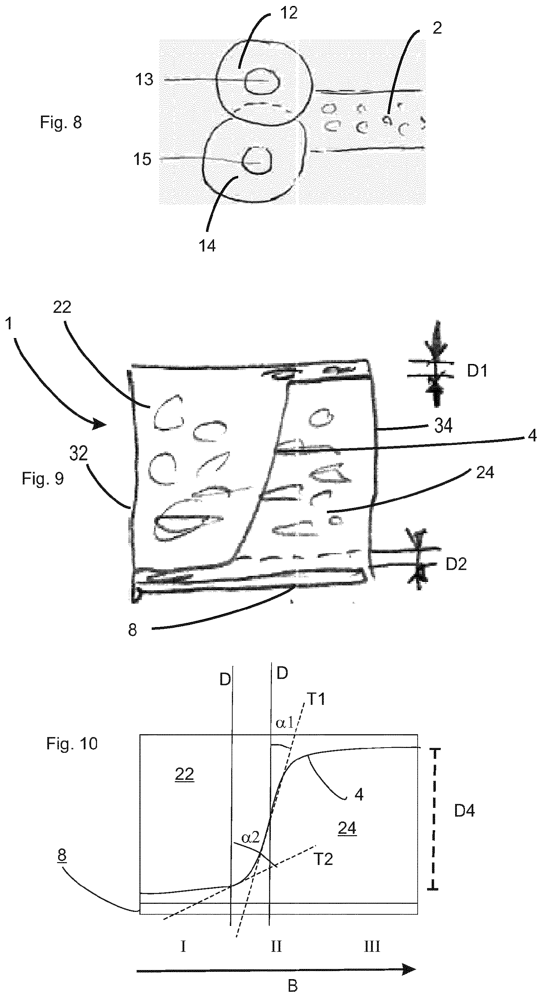

Fig. 8 zeigt eine Vorgehensweise für eine vorteilhafte Herstellung eines Dichtbands. Auch hier wird der Schaumstoffträger 2 zwischen zwei Förderrollen 12 und 14 geführt, wobei hier auch die Wellen 13 und 15 dargestellt sind. Im Vergleich zum internen Stand der Technik sind hier die beiden Walzen näher aneinander herangeführt und man erkennt, dass sich die Vorsprünge jeweils überlappen. Dies ist jedoch nicht unbedingt erforderlich jedoch vorteilhaft.

Durch die nähere Zusammenführung der beiden Wellen bzw. der Förderwalzen 12 und 14 wird der Träger noch wesentlich stärker gekrümmt und auf diese Weise können die Wellenausprägungen noch stark erhöht werden. Bevorzugt kann so der Übergang von einem Wellenberg zu einem Wellental noch steiler werden.

Das Resultat hierzu ist in Fig. 9 in Form eines Dichtbands 1 gezeigt. Auch hier sind wieder die Schaumstoffträgerteile 22 und 24 dargestellt, jedoch mit dem Bezugszeichen D1 und D2 die deutlich minimierten Dickenabschnitte, durch welche noch Luft von der rauminnenseitigen Seitenfläche 32 zur raumaußenseitigen Seitenfläche 34 oder von der raumaußenseitigen Seitenfläche 34 zur rauminnenseitigen Seitenfläche 32 treten kann. Auch hier ist wieder ein Klebestreifen 8 an der Unterseite des Dichtbands dargestellt.

Fig. 10 zeigt schematisch eine Veranschaulichung des Verlaufs des Dichtstreifens bzw. des Dichtelements zwischen den Schaumstoffträgerteilen 22 und 24. Dabei ist gezeigt, dass sich eine Steigung des Verlaufs der Trennschicht 4 bzw. der Sperrschicht 4 kontinuierlich ändert. In einem Zentralbereich II bezüglich der Breitenrichtung B des Schaumstoffträgers verläuft die Folie mit einer sehr hohen Steigung, was erkennbar wird durch den relativ kleinen Winkel α1, den diese Steigung bzw. eine gedachte geometrische Tangente T1 mit der Dickenrichtung D des Bandes einschließt. In den Bereichen I und III, d. h. in der Nähe der rauminnenseitigen Seitenfläche 32 und der raumaußenseitigen Seitenfläche 38 ist diese Steigung relativ gering, was durch den hohen Winkel α2 (nur für den linken Bereich I dargestellt) deutlich wird. Wie oben bereits als vorteilhafte Ausgestaltung erwähnt wurde, ist der Bereich der größten Steigung des Verlaufs der Trennschicht gegenüber der Breitenrichtung außermittig angeordnet. Der Zentralbereich II liegt somit zwar bevorzugt im Inneren des Dichtbandes, muss jedoch nicht mittig angeordnet sein.

Im Gegenstand zum Stand der Technik erstreckt sich die Schicht 4 auch über einen größeren Bereich in der Dickenrichtung des Bandes. Das Bezugszeichen D4 kennzeichnet den Dickenabschnitt des Dichtungsbandes, innerhalb dessen sich die Schicht 4 erstreckt Bevorzugt ist ein Verhältnis zwischen diesem Dickenabschnitt D4 und der Gesamtdicke D (des im Wesentlichen rückgestellten Dichtungsbandes größer als 0,6. Bevorzugt größer als 0,7, bevorzugt größer als 0,8 und besonders bevorzugt größer als 0,9.

Daran erkennt man, dass sich bevorzugt eine Steigung der Trennschicht 4 bzw. der Sperrschicht 4 innerhalb des Schaumstoffkörpers stark ändert. Bevorzugt ist daher das Trennschicht 4 weder horizontal noch vertikal angeordnet und weist einen gekrümmten Verlauf auf, jedenfalls jedoch einen Verlauf mit einer sich ändernden Steigung.

Neben den in den Figuren gezeigten Möglichkeiten, d. h. eines Überkomprimierens derart, dass der Schaumstoff folienartig zusammengedrückt bleibt, könnte auch eine Thermobehandlung mit dem gleichen Ziele erfolgen. Beispielsweise wäre denkbar, dass die Oberflächen 36 und/oder 38 des/der Schaumstoffträgerteils/e thermisch oder chemisch derart behandelt werden, dass eine Verhautung der Oberflächen 36 und/oder 38 eintritt. Denkbar wäre hier eine thermische Beaufschlagung, welche zur Zerstörung der Schaumstruktur führt. Als geeignet hat sich bei PU-Schäumen beispielsweise eine Beaufschlagung mit einer Temperatur im Bereich von ca. 250 - 350 °C, besonders bevorzugt im Bereich von 280 - 290°C erwiesen. Eine gleichzeitige Druckbeaufschlagung hat sich als vorteilhaft herausgestellt. Ergänzend oder alternativ dazu könnte eine chemische Oberflächenbehandlung erfolgen, welche eine Zerstörung der molekularen Bindungen zwischen oder innerhalb der Polymerketten zerstört. Denkbar wäre eine Säure- oder Basenbehandlung und anschließende Neutralisation.

Wie oben erwähnt, kann es sich bei der Trennschicht 4 um eine folienartige Schicht handeln, es wäre jedoch auch möglich, dass diese Trennschicht gewissermaßen aufgespritzt wird. Beispielsweise könnte dazu eine filmbildende Kunststoffdispersion verwendet werden. So ist es möglich, dass der Schaumstoffträger zunächst in die beiden Schaumstoffträgerteile 22 und 24 geschnitten wird und anschließend in den Zwischenbereich ein Mittel aufgesprüht wird, welches im weiteren Verlauf die Trennschicht 4 ausbildet.

Bevorzugt wird zum Herstellen des Schaumstoffkörpers der Schaumstoffträger 2 geschnitten, dann eines der Trägerteile von den anderen beabstandet bzw. entfernt und die Trennschicht 4eingebracht. Anschließend werden die beiden Schaumstoffträgerteile 22, 24 wieder einander zugeführt.

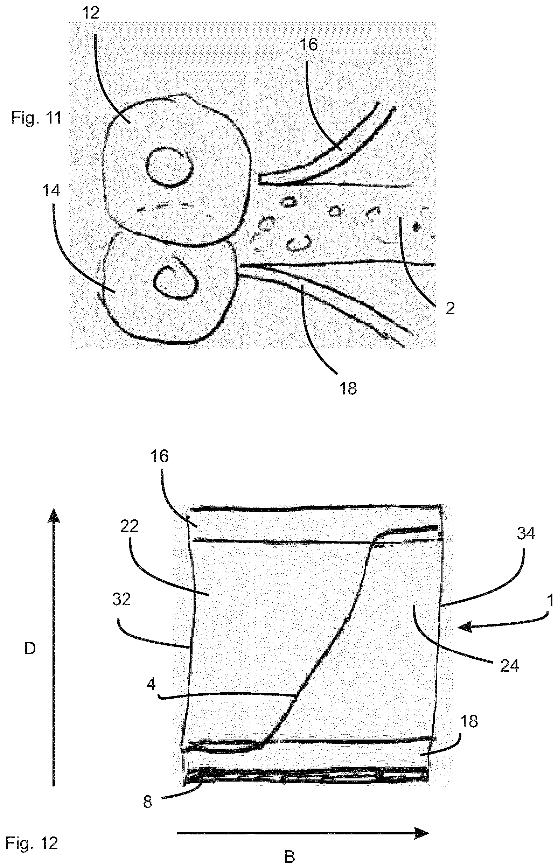

Fig. 11 zeigt eine weitere vorteilhafte Vorgehensweise zur Erzeugung eines Dichtbandes. Hier werden an dem Schaumstoffträger 2 oberseitig und unterseitig jeweils zwei weitere Elemente bzw. Deckschichten bzw. Lagen 16 und 18 angeordnet. Diese beiden Deckschichten bestehen beispielsweise hier ebenfalls aus einem Schaumstoff bzw. einer Schaumbahn. Jedoch handelt es sich bei diesen Schaumstoffen 16 und 18 um luftdichte Schaumstoffe. Diese können, müssen aber nicht, imprägniert sein. Bevorzugt werden sie mit dem jeweiligen Schaumstoffträgerteil z.B. mittels einer Selbstklebung verklebt.

Denkbar wäre jedoch auch, dass die Deckschichten 16 und 18 auch als mit dem Schaumstoffträger 2 unverbundene Hilfsschichten bereitgestellt werden. Bevorzugt laufen sie vor der Profilierung dem Schaumstoffträger 2 zu und unterstützten die Profilierung. Insbesondere beabstanden sie den Schaumstoffträger 2 von den Walzen 12 und 14 und ermöglichen so das schneiden mit der oben beschriebenen Schneidevorrichtung in einem gewissen Abstand von den Walzen. Nach der Profilierung können die Hilfsschichten 16 und 18 entfernt und wiederverwendet werden. Sie dienen zu einer steileren Profilierung und einer erwünschten schmaleren Ausprägung der Bereiche P1 und P2. Der minimale Abstand zwischen der Trennschicht 4 und den oberen und unteren Oberflächen des jeweiligen Schaumstoffträgerteils kann so soweit minimiert werden, dass der Übertritt von Luft von der rauminnenseitigen Seitenfläche 32 zur raumaußenseitigen Seitenfläche 34 oder von der raumaußenseitigen Seitenfläche 34 zur rauminnenseitigen Seitenfläche 32 minimiert wird.

Fig. 12 zeigt auch hier eine entsprechende Darstellung eines Dichtbands 1, bei dem hier mehrere Schichten bzw. Elemente vorhanden sind. Zunächst ist eine obere Schaumstoffbahn 16 also der luftdichte Schaumstoff bzw. die obere Deckschicht vorgesehen. An diese schließt sich ein erstes Schaumstoffträgerteil 22 an, anschließend die Trennschicht 4 und das zweite Schaumstoffträgerteil 24. Unterhalb des zweiten Schaumstoffträgerteils 24 schließt sich eine weitere Schaumstoffbahn bzw. Deckschicht 18 (aus luftdichten Schaumstoff 18) an und schließlich die bereits oben erwähnte Klebeschicht 8. Wie oben bereits als eine bevorzugte Ausführungsform erwähnt wurde, ist in Fig. 12 dargestellt, dass die Trennschicht 4 sich nicht nur an die jeweiligen Deckschichten annähert oder anschmiegt, sondern abschnittsweise in diese eindringt.

Die Bezugszeichen 32 und 34 kennzeichnen auch hier wieder die rauminnenseitigen bzw. raumaußenseitigen Seitenflächen des Dichtbandes. Wie oben erwähnt, ist das Dichtband als Rolle konfektioniert, d. h. es würde auf eine Rolle aufgewickelt werden, wobei sich eine Rollenachse mit der derartigen Rolle parallel zu der Breitenrichtung B erstreckt. Man erkennt, dass bei dieser Ausführungsform in dem Zentralbereich ein Durchdringen von Luft durch die Trennschicht 4 verhindert wird. In oberen und unteren Bereichen kann ebenfalls keine Luft durchtreten, da es sich bei den Deckschichten 16 und 18 um luftdichte Schaumstoffelemente handelt.

Damit können hier durch die Deckschichten 16 und 18 die jeweils an sich nicht luftdichten Täler geschlossen werden.

Es können auch die beiden Vorgehensweisen kombiniert werden, einerseits können relativ steile Flanken der Trennschicht 4 und andererseits auch die zusätzlichen Deckschichten 16 und 18 angebracht werden.

Damit können bevorzugt die folgenden Verfahrensschritte durchgeführt werden. Zunächst kann (optional) eine Schaumstoffbahn und insbesondere eine PU-Weichschaumbahn imprägniert werden. In einem weiteren (optionalen) Verfahrensschritt kann diese Weichschaumbahn getrocknet werden. In einem weiteren Verfahrensschritt können ein und bevorzugt zwei sehr luftdichte und bevorzugt auch dünne Schaumstoffbahnen an den Ober-und Unterseiten der Schaumstoffbahn angebracht werden, Dies kann beispielsweise mit einem doppelseitigen Klebeband (SK) erfolgen. In einem weiteren Verfahrensschritt werden die Schaumstoffbahn und die beiden daran angeordneten Schaumstoffbahnen mit Walzen insbesondere mit sehr eng eingestellten Walzen profiliert. Auf diese Weise ergibt sich wie oben erwähnt eine steilere Wellenflanke. Anschließend wird die so teilweise komprimierte Schaumstoffbahn in zwei Schaumstoffträgerteile geschnitten.

In einem weiteren (optionalen) Verfahrensschritt wird die Bahn aufgeklappt bzw. eines der beiden Schaumstoffträgerteile von dem anderen beabstandet, um eine Trennschicht, beispielsweise eine Folie oder eine Beschichtung, einzufügen.

In einem weiteren Verfahrensschritt werden die Schaumstoffträgerteile 22, 24 zusammengefügt.

In einem weiteren (optionalen) Verfahrensschritt erfolgt bevorzugt ein Ablängen. Dabei kann dieser Schritt des Ablängens auch nach der Profilierung vorgenommen werden. Schließlich werden die Schaumstoffträger (optional), bevorzugt mit einer Selbstklebeschicht 8 zu einer Rolle, insbesondere einer Großrolle komprimiert. Diese Großrolle wird in einem letzten Verfahrensschritt abgestochen, sodass die einzelnen Rollen erzeugt werden.

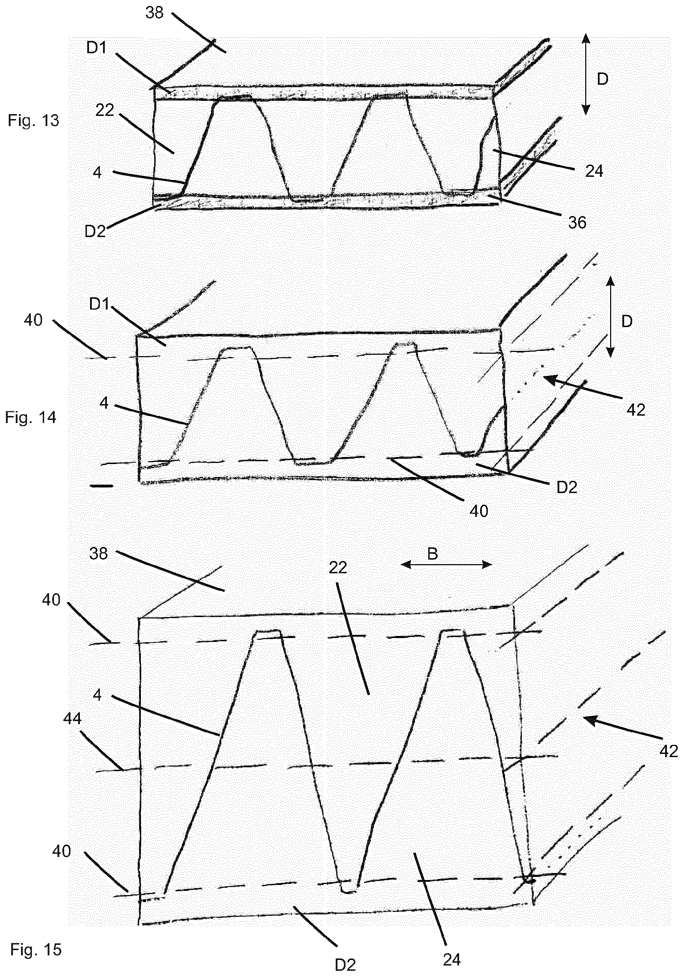

Figur 13 zeigt eine Schnittdarstellung eines Zwischenprodukts einer bevorzugten Verfahrensvariante. Der Schaumstoffträger 2 ist bereits durch einen ersten Schnitt in einen ersten Schaumstoffträgerteil 22 und einen zweiten Schaumstoffträgerteil 24 geschnitten worden. In den durch diesen Schnitt entstehenden Spalt ist eine Trennschicht 4 eingebracht worden. Diese kontaktiert die durch den Schnitt erzeugten zweiten Oberflächen jeweils vollflächig. Der erste Schnitt und somit auch die Trennschicht 4 folgt einem Wellenförmigen Verlauf. Talbereiche 22a und Bergbereiche 22b folgen in Breitenrichtung aufeinander und sind bezüglich der Dickenrichtung D gegenüber einander verschoben. In den Bergbereichen 22b nähert sich die Trennschicht 4 der oberen ersten Oberfläche 38 an, in den Talbereichen der unteren ersten Oberfläche 36.

Trotz dieser Annäherung bleiben jedoch Dickenabschnitte D1 und D2 bestehen, die nicht vollständig (entlang der Dickenrichtung) von der Trennschicht 4 durchzogen sind. Zur Vermeidung von Luftdurchtritt durch diese Bereiche im Endprodukt (dem Dichtband) ist bevorzugt vorgesehen, diese die Dickenabschnitte D1 und D2 bildenden Streifen abzutrennen.

Figur 14 zeigt eine schematische Darstellung einer bevorzugten Verfahrensvariante zur Abtrennung dieser die Dickenabschnitte D1 und D2 bildenden Streifen. Im gezeigten Beispiel sind zwei zweite Schnitte 40 entlang den schraffiert dargestellten Ebenen vorgesehen. Dadurch werden die die Dickenabschnitte D1 und D2 bildenden Streifen abgetrennt und ein gegenüber der Gesamthöhe H_{D} des Schaumstoffträgers 2 eine verringerte Dicke aufweisendes Zwischenprodukt 42 erzeugt. Dieses Zwischenprodukt umfasst zwei miteinander verbundene Schaumstoffträgerteile 22 und 24 zwischen denen eine Trennschicht 4 angeordnet ist. Die Trennschicht 4 verläuft in jedem Bereich zwischen einem Maximum und einem Minimum jeweils über die gesamte Dicke D des Zwischenprodukts, so dass keine Bereiche bestehen, in denen ein Gas in Breitenrichtung das Zwischenprodukt 42 in Breitenrichtung B durchströmen könnte, ohne durch die (luftdichte) Trennschicht 4 aufgehalten zu werden.

Figur 15 zeigt eine schematische Darstellung einer weiteren bevorzugten Verfahrensvariante, in der der Anteil an nicht zur Herstellung des gewünschten Dichtbandes nutzbaren Schaumstoffs reduziert ist. Dies kann durch Verwendung eines Schaumstoffträgers 2 größerer Dicke (in Dickenrichtung D) und das Einbringen mindestens eines dritten Schnitts 44. Ist wie im gezeigten Beispiel ein einziger dritter Schnitt 44 vorgesehen, kann bei doppelter Menge zur Herstellung von Dichtbändern nutzbarem Zwischenprodukt 42 die Menge nicht nutzbaren Schaumstoffs gleich gehalten werden. Um zu gewährleisten, dass jeglicher Abschnitt des Zwischenprodukts 42 über seine gesamte Dicke von der Trennschicht durchzogen ist, werden auch hier lediglich zwei Streifen (nämlich die oberen und unteren Dickenabschnitte D1 und D2) abgetrennt, so dass gegenüber der in Figur 14 gezeigten Variante die Menge des nicht nutzbaren Schaumstoffs nicht vergrößert wird. Der nutzbare Anteil des Zwischenprodukts 42 ist jedoch verdoppelt, da durch den dritten Schnitt 44 zwei dem in Figur 14 äquivalente Zwischenprodukte 42 erzeugt werden.

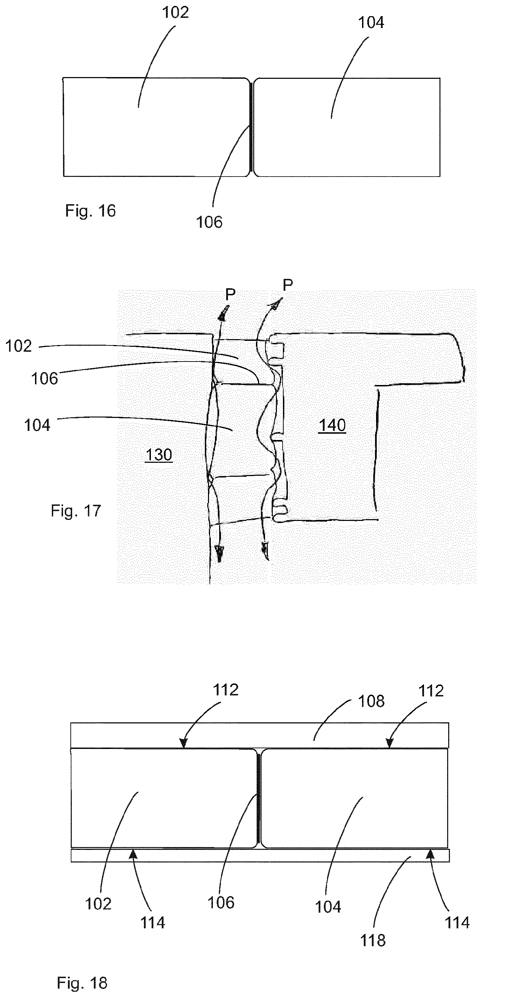

Fig. 16 zeigt ein Dichtband nach dem Stand der Technik. Dieses Dichtband weist einen ersten Schaumstoffkörper 102 und einen zweiten Schaumstoffkörper 104 auf. Zwischen diesen beiden Schaumstoffkörpern verläuft eine Trennschicht 106.

Man erkennt, dass in den Endabschnitten dieser Trennschicht zwischen den beiden Schaumstoffkörpern jeweils Mulden entstehen können, welche einen Durchtritt von Luft begünstigen und damit die Isolationswirkung beeinträchtigen können.

Fig. 17 zeigt das in Fig. 16 gezeigte Dichtband in einem Montagezustand zwischen zwei Baukörpern 130 und 140. Wie durch die Pfeile P angedeutet, kann Luft hier zwischen den Baukörpern 130 und 140 und vorbei an dem Dichtband passieren.

Fig. 18 zeigt eine Darstellung eines bevorzugten Dichtbandes. Auch hier sind wieder zwei Schaumstoffkörper 102 und 104 vorgesehen, zwischen denen die Trennschicht 106 verläuft. Diese Trennschicht verläuft dabei hier im Wesentlichen senkrecht zwischen einer ersten Oberfläche 112 und einer zweiten Oberfläche 114. Diese beiden Oberflächen sind jeweils zur Anlage an den Baukörpern bestimmt.

Das Bezugszeichen 108 kennzeichnet die weitere Schicht aus einem luftundurchlässigen Material, die hier an der Oberfläche 112 angeordnet ist und diese bevorzugt im Wesentlichen vollständig abdeckt.

An der zweiten Oberfläche 114 ist eine Klebeschicht 118 angeordnet, die dazu dient, um das Dichtband 100 an einem Baukörper anzukleben. Auch an dieser Oberfläche könnte noch eine weitere Schicht (nicht gezeigt) aus einem luftundurchlässigen Material angeordnet sein.

Insbesondere durch diese weitere Schicht 108 können die Mulden abgedeckt werden, die an den Grenzbereichen zwischen den beiden Schaumstoffkörpern 102 und 104 entstehen.

Es wird darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können. Es wird jedoch darauf hingewiesen, dass die Erfindung ausschließlich durch die beigefügten Ansprüche definiert ist.

### Bezugszeichenliste

- 1: Dichtband
- 2: Schaumstoffträger
- 4: Trennschicht, Sperrschicht (Folie, aufgesprühte/aufgetragene Schicht)
- 5: Schneidelement
- 8: Haftstreifen
- 12, 14: Walzen bzw. Rollen
- 12a, 14a: Vorsprünge
- 12b, 14b: Ausnehmungen
- 13, 15: Wellen der Walzen bzw. Rollen
- 16: obere luftdichte Materiallage, Deckschicht
- 18: untere luftdichte Materiallage, Deckschicht
- 22: erstes Schaumstoffträgerteil
- 22a, 24a: Talbereiche
- 22b, 24b: Bergbereiche
- 24: zweites Schaumstoffträgerteil
- 32: rauminnenseitige Seitenfläche
- 34: raumaußenseitige Seitenfläche
- 36: untere (erste) Oberfläche des Schaumstoffträgerteils
- 38: obere (erste) Oberfläche des Schaumstoffträgerteils
- 40: zweiter Schnitt
- 42: Zwischenprodukt, verbundene Schaumstoffträgerteile mit Trennschicht
- 44: Schnitt
- 100: Dichtband (interner Stand der Technik)
- 102: erster Schaumstoffkörper
- 104: zweiter Schaumstoffkörper
- 106: Trennschicht
- 108: weitere Schicht
- 112: erste Oberfläche
- 114: zweite Oberfläche
- 118: Klebeschicht
- 130: Baukörper
- 140: Baukörper

- L: Längsrichtung
- B: Breitenrichtung
- D: Dickenrichtung
- D1, D2: Dickenabschnitte
- D4: Dickenabschnitt über den sich die Schicht erstreckt
- F: Förderrichtung
- S: Schnitte zum Abstechen der Rollen
- P1, P2, P3: Strömungen
- T1, T2: Tangenten
- α1, α2: Winkel
- I, II, II: Bereiche

## Patentansprüche

1. Verfahren zum Herstellen eines Dichtbandes (1) und insbesondere eines Schaumstoffdichtbandes (1) mit den Schritten:
- Zur Verfügung stellen eines Schaumstoffträgers (2) und Transportieren dieses Schaumstoffträgers (2) in einer Förderrichtung (F), wobei sich dieser Schaumstoffträger (2) in einer zu der Förderrichtung parallelen Längsrichtung (L), in einer zu der Längsrichtung (L) senkrechten Breitenrichtung (B) und in einer Dickenrichtung (D) erstreckt, wobei diese Dickenrichtung (D) senkrecht zu der Längsrichtung (L) und der Breitenrichtung (B) steht,
- zumindest abschnittsweises Komprimieren des Schaumstoffträgers in dessen Dickenrichtung, wobei der Grad dieser Komprimierung über die Breitenrichtung hin variiert
- Schneiden dieses Schaumstoffträgers (2) in einem wenigstens teilweise komprimierten Zustand des Schaumstoffs in einen ersten Schaumstoffträgerteil (22) und einen zweiten Schaumstoffträgerteil (24), wobei sich der Schnitt zumindest in der Längsrichtung (L) und der Breitenrichtung (B) erstreckt
- Anbringen einer Trennschicht (4) an wenigstens einem der beiden Schaumstoffträgerteile
(22, 24) an einer vorgegebenen Oberfläche dieses Schaumstoffträgerteils
- Zusammenführen der beiden Schaumstoffträgerteile (22, 24), derart, dass die Trennschicht (4) zwischen dem ersten Schaumstoffträgerteil (22) und dem zweiten Schaumstoffträgerteil (24) angeordnet ist,
wobei
die Schicht (4) derart zwischen den beiden Schaumstoffträgerteilen (22, 24) angeordnet wird, dass die Dicke wenigstens eines der beiden Schaumstoffträgerteile (22, 24) betrachtet in der Breitenrichtung (B) variiert.

2. Verfahren nach Anspruch 1,
**dadurch gekennzeichnet, dass**
die Trennschicht bezüglich der Breitenrichtung nicht oder lediglich abschnittsweise parallel verlaufend, sondern zumindest gegenüber der Breitenrichtung zumindest abschnittsweise gekrümmt verlaufend eingebracht wird und bevorzugt in der Breitenrichtung wellenförmig verlaufend eingebracht wird.

3. Verfahren nach wenigstens einem der vorangegangenen Ansprüche,
**dadurch gekennzeichnet, dass**
der Schaumstoff zwischen zwei Förderrollen (12, 14) transportiert wird und ein Abstand zwischen diesen beiden Förderrollen (12, 14) variiert.

4. Verfahren nach wenigstens einem der Anspruch 3,
**dadurch gekennzeichnet, dass**
ein geradlinig verlaufendes Schneidwerkzeug verwendet wird und dem Schaumstoff nach den Schneidevorgang eine Rückstellung ermöglicht wird.

5. Verfahren nach wenigstens einem der Ansprüche 3 - 4,
**dadurch gekennzeichnet, dass**
die Förderrollen derart beschaffen sind, dass diese Vorsprünge (12a, 14a) und Ausnehmungen (12b, 14b) aufweisen, wobei wenigstens ein Vorsprung (12a, 14a) einer Förderrolle in eine Ausnehmung (14b, 12b) der anderen Förderrolle eingreift.

6. Verfahren nach wenigstens einem der vorangegangenen Ansprüche,
**dadurch gekennzeichnet, dass**
in einem weiteren Verfahrensschritt die beiden miteinander verbundenen Schaumstoffträgerteile (22, 24) geschnitten werden und bevorzugt ein weiterer Schnitt in einer Schnittebene erzeugt wird, die sich in der Dickenrichtung und in der Längsrichtung (L) erstreckt.

7. Verfahren nach Anspruch 6,
**dadurch gekennzeichnet, dass**
der weitere Schnitt in einem Bereich des Schaumstoffträgers angeordnet wird, in dem sich die Trennschicht (4) in der Nähe einer der beiden Oberseiten des aus den Schaumstoffträgerteilen (22, 24) gebildeten Verbunds verläuft.

8. Verfahren nach Anspruch 6 oder 7,
**dadurch gekennzeichnet, dass**
bei dem weiteren Schnitt auch die Trennschicht (4) zwischen den Schaumstoffträgerteilen (22, 24) mitgeschnitten wird.

9. Verfahren nach wenigstens einem der vorangegangenen Ansprüche,
**dadurch gekennzeichnet, dass**
in einem nicht komprimierten Zustand in dem Verbund der zusammengeführten Schaumstoffträgerteile (22, 24) n weitere dritte Schnitte eingebracht werden welche parallel zu einer ersten Oberfläche (36, 38) verlaufen, wobei n mindestens 1 ist und der nächstliegende dieser dritten Schnitte von dieser ersten Oberfläche (36, 38) mindestens H_{D}/(n+1) entfernt ist, wobei H_{D} die Höhe des Schaumstoffträgers (2) in Dickenrichtung (D) ist.

10. Als Dichtbandrolle (10) konfektioniertes Schaumstoffband (1) mit einem ersten Schaumstoffträgerteil (22) und einem zweiten Schaumstoffträgerteil (24) und einer Trennschicht (4), welche zwischen dem ersten Schaumstoffträgerteil (22) und dem Schaumstoffträgerteil angeordnet ist, wobei sich das Schaumstoffband in einer Längenrichtung (L), einer hierzu senkrechten Breitenrichtung (B) und einer zu der Längenrichtung (L) und der Breitenrichtung (B) senkrechten Dickenrichtung (D) erstreckt, wobei das Schaumstoffband (1) an einer Oberfläche eine Klebeschicht (8) aufweist und diese Oberfläche sich in der Längenrichtung (L) und der Breitenrichtung (B) erstreckt,
wobei
die Trennschicht (4) sich sowohl in der Längenrichtung (L) als auch in der Breitenrichtung (B) als auch in der Dickenrichtung (D) erstreckt und sich bezüglich der Breitenrichtung nicht oder lediglich abschnittsweise parallel erstreckt, sondern zumindest gegenüber der Breitenrichtung zumindest abschnittsweise gekrümmt erstreckt, wobei die Trennschicht in der gesagten Breitenrichtung wellenförmig verläuft, wobei an wenigstens einem Schaumstoffträgerteil (22, 24) zusätzlich zu der Trennschicht (4) und der Klebeschicht (8) noch eine weitere Schicht, nämlich eine Deckschicht (18), angeordnet ist und sich die Trennschicht (4) bis in die Deckschicht (18) hinein erstreckt.

11. Schaumstoffband nach Anspruch 10,
**dadurch gekennzeichnet, dass**
die Trennschicht innerhalb des Schaumstoffkörpers derart angeordnet ist, dass sie einen vorgegebenen Winkel mit der Dickenrichtung einschließt, wobei dieser Winkel variiert, bevorzugt variiert dieser Winkel über die Breitenrichtung hinweg um wenigstens 10° Grad, weiter bevorzugt um wenigstens 20° Grad, insbesondere bevorzugt um wenigstens 30° Grad.

12. Schaumstoffband nach wenigstens einem der Ansprüche 10 - 11,
**dadurch gekennzeichnet, dass**
der Bereich der größten Steigung des Verlaufs der Trennschicht gegenüber der Breitenrichtung außermittig angeordnet, wobei bevorzugt der Bereich der größten Steigung des Verlaufs der Trennschicht gegenüber der Breitenrichtung gegenüber der Mitte des Dichtbandes in Breitenrichtung zur im Einbauzustand der Rauminnenseite zugewandten Seitenfläche des Dichtbandes hin verschoben ist.

13. Schaumstoffband nach wenigstens einem der Ansprüche 10 - 12,
**dadurch gekennzeichnet, dass**
an wenigstens einem weiteren Schaumstoffträgerteil (22, 24) zusätzlich zu der Trennschicht (4) und der Klebeschicht (8) noch eine weitere Schicht, bevorzugt eine weitere Deckschicht (18), angeordnet ist.

14. Schaumstoffband nach Anspruch 13,
**dadurch gekennzeichnet, dass**
sich die Trennschicht (4) bis in die weitere Deckschicht (18) hinein oder bis an die weitere Deckschicht (18) heran erstreckt.

15. Schaumstoffband nach wenigstens einem der Ansprüche 10 - 14,
**dadurch gekennzeichnet, dass**
das Dichtband so gestaltet ist, dass in einem montierten Zustand die Trennschicht zwischen den Schaumstoffträgerteilen einen Luftdurchtritt in Breitenrichtung des Dichtbandes im Wesentlichen verhindert.

## Claims

1. Method for producing a sealing tape (1) and, in particular, a foam sealing tape (1), comprising the steps of:
- providing a foam carrier (2) and transporting this foam carrier (2) in a conveying direction (F), wherein this foam carrier (2) extends in a longitudinal direction (L) parallel to the conveying direction, in a width direction (B) perpendicular to the longitudinal direction (L) and in a thickness direction (D), wherein this thickness direction (D) is perpendicular to the longitudinal direction (L) and the width direction (B),
- at least partially compressing the foam carrier in its thickness direction, wherein the degree of this compression varies across the width direction
- cutting this foam carrier (2) in an at least partially compressed state of the foam into a first foam carrier part (22) and a second foam carrier part (24), wherein the cut extends at least in the longitudinal direction (L) and the width direction (B)
- attaching a separating layer (4) to at least one of the two foam carrier parts (22, 24) on a predetermined surface of this foam carrier part
- bringing the two foam carrier parts (22, 24) together in such a way that the separating layer (4) is arranged between the first foam carrier part (22) and the second foam carrier part (24),
wherein
the layer (4) is arranged between the two foam carrier parts (22, 24) in such a way that the thickness of at least one of the two foam carrier parts (22, 24) varies in the width direction (B).

2. Method according to claim 1,
**characterized in that**
the separating layer is not arranged parallel to the width direction or only arranged parallel in sections, but is introduced curved at least in sections relative to the width direction and is preferably introduced in a wave-like manner in the width direction.

3. Method according to at least one of the preceding claims,
**characterized in that**
the foam is transported between two conveyor rollers (12, 14) and the distance between these two conveyor rollers (12, 14) varies.

4. Method according to at least one of claim 3,
**characterized in that**
a straight cutting tool is used and the foam is allowed to return to its original position after the cutting process.

5. Method according to at least one of claims 3-4,
**characterized in that**
the conveyor rollers are designed such that they have projections (12a, 14a) and recesses (12b, 14b), wherein at least one projection (12a, 14a) of one conveyor roller engages in a recess (14b, 12b) of the other conveyor roller.

6. Method according to at least one of the preceding claims,
**characterized in that**
in a further method step, the two foam carrier parts (22, 24) connected to each other are cut and, preferably, a further cut is made in a cutting plane extending in the thickness direction and in the longitudinal direction (L).

7. Method according to claim 6,
**characterized in that**
the further cut is made in an area of the foam carrier in which the separating layer (4) runs close to one of the two upper sides of the composite formed from the foam carrier parts (22, 24).

8. Method according to claim 6 or 7,
**characterized in that**
the separating layer (4) between the foam carrier parts (22, 24) is also cut during the further cut.

9. Method according to at least one of the preceding claims,
**characterized in that**
in an uncompressed state, n further third cuts are made in the composite of the joined foam carrier parts (22, 24), which run parallel to a first surface (36, 38), where n is at least 1 and the closest of these third cuts is at least H_{D} /(n+1), where H_{D} is the height of the foam carrier (2) in the thickness direction (D).

10. Foam tape (1) assembled as a sealing tape roll (10) with a first foam carrier part (22) and a second foam carrier part (24) and a separating layer (4), which is arranged between the first foam carrier part (22) and the foam carrier part, wherein the foam tape extends in a longitudinal direction (L), a width direction (B) perpendicular thereto, and a thickness direction (D) perpendicular to the length direction (L) and the width direction (B), wherein the foam tape (1) has an adhesive layer (8) on one surface and this surface extends in the length direction (L) and the width direction (B),
wherein
the separating layer (4) extends both in the longitudinal direction (L) and in the width direction (B) and in the thickness direction (D) and does not extend parallel to the width direction or only extends parallel to it in sections, but instead extends at least in sections in a curved manner relative to the width direction, wherein the separating layer runs in a wave-like manner in said width direction, wherein, in addition to the separating layer (4) and the adhesive layer (8), at least one further layer, namely a cover layer (18), is arranged on at least one foam carrier part (22, 24), and the separating layer (4) extends into the cover layer (18).

11. Foam tape according to claim 10,
**characterized in that**
the separating layer is arranged within the foam body in such a way that it forms a predetermined angle with the thickness direction, wherein this angle varies, preferably this angle varies across the width direction by at least 10°, further preferably by at least 20°, and in particular preferably by at least 30°.

12. Foam tape according to at least one of claims 10-11,
**characterized in that**
the area of greatest slope of the course of the separating layer relative to the width direction is arranged off-center, wherein preferably the area of greatest slope of the course of the separating layer relative to the width direction is shifted relative to the center of the sealing tape in the width direction toward the side surface of the sealing tape facing the interior of the room in the installed state.

13. Foam tape according to at least one of claims 10-12,
**characterized in that**
in addition to the separating layer (4) and the adhesive layer (8), a further layer, preferably a further cover layer (18), is arranged on at least one further foam carrier part (22, 24).

14. Foam tape according to claim 13,
**characterized in that**
the separating layer (4) extends into the further cover layer (18) or up to the further cover layer (18).

15. Foam tape according to at least one of claims 10-14,
**characterized in that**
the sealing tape is designed such that, when installed, the separating layer between the foam carrier parts essentially prevents air from passing through in the width direction of the sealing tape.

## Revendications

1. Procédé de fabrication d'une bande d'étanchéité (1) et en particulier d'une bande d'étanchéité en mousse (1) avec les étapes :
- de mise à disposition d'un support en mousse (2) et de transport dudit support en mousse (2) dans une direction de convoyage (F), dans lequel ledit support en mousse (2) s'étend dans une direction longitudinale (L) parallèle à la direction de convoyage, dans une direction de la largeur (B) perpendiculaire à la direction longitudinale (L) et dans une direction de l'épaisseur (D), dans lequel ladite direction de l'épaisseur (D) est perpendiculaire à la direction longitudinale (L) et à la direction de la largeur (B),
- de compression au moins par endroits du support en mousse dans la direction de son épaisseur, dans lequel le degré de cette compression varie dans la direction de la largeur,
- de découpe dudit support en mousse (2) en une première partie de support en mousse (22) et une deuxième partie de support en mousse (24) dans un état au moins en partie comprimé de la mousse, dans lequel la coupe s'étend au moins dans la direction longitudinale (L) et dans la direction de la largeur (B),
- d'application d'une couche de séparation (4) sur au moins une des deux parties de support en mousse (22, 24) sur une surface prédéfinie de ladite pièce de support en mousse,
- d'assemblage des deux parties du support en mousse (22, 24) de telle manière que la couche de séparation (4) est disposée entre la première partie du support en mousse (22) et la deuxième partie du support en mousse (24),
dans lequel
la couche (4) est disposée entre les deux parties de support en mousse (22, 24) de telle manière que l'épaisseur d'au moins une des deux parties de support en mousse (22, 24) varie dans la direction de la largeur (B).

2. Procédé selon la revendication 1,
**caractérisé en ce que**
la couche de séparation n'est pas introduite de manière parallèle par rapport à la direction de la largeur, ou seulement de manière parallèle par endroits, mais est plutôt introduite de manière incurvée, au moins par endroits, au moins par rapport à la direction de la largeur, et est introduite de manière préférée sous forme ondulée dans la direction de la largeur.

3. Procédé selon au moins l'une quelconque des revendications précédentes,
**caractérisé en ce que**
la mousse est transportée entre deux rouleaux convoyeurs (12, 14) et un écartement entre lesdits deux rouleaux convoyeurs (12, 14) varie.

4. Procédé selon au moins la revendication 3,
**caractérisé en ce que**
un outil de coupe s'étendant de manière rectiligne est utilisé et la mousse peut revenir en position après l'opération de découpe.

5. Procédé selon au moins l'une quelconque des revendications précédentes 3 à 4,
**caractérisé en ce que**
les rouleaux de convoyage sont conçus de telle manière que ceux-ci présentent des parties faisant saillie (12a, 14a) et des évidements (12b, 14b), dans lequel au moins une partie faisant saillie (12a, 14a) d'un rouleau de convoyage vient en prise avec un évidement (14b, 12b) de l'autre rouleau de convoyage.

6. Procédé selon au moins l'une quelconque des revendications précédentes,
**caractérisé en ce que**
dans une autre étape de procédé, les deux pièces de support en mousse (22, 24) reliées entre elles sont découpées et, de manière préférée, une autre coupe est générée dans un plan de coupe qui s'étend dans la direction de l'épaisseur et dans la direction longitudinale (L).

7. Procédé selon la revendication 6,
**caractérisé en ce que**
la découpe ultérieure est disposée dans une zone du support en mousse dans laquelle la couche de séparation (4) s'étend à proximité d'une des deux faces supérieures du composite formé à partir des parties de support en mousse (22, 24).

8. Procédé selon la revendication 6 ou 7,
**caractérisé en ce que**
lors de la coupe ultérieure, la couche de séparation (4) entre les pièces de support en mousse (22, 24) est également découpée.

9. Procédé selon au moins l'une quelconque des revendications précédentes,
**caractérisé en ce que**
dans un état non comprimé, un nombre n d'autres troisièmes coupes sont introduites dans l'assemblage des pièces de support en mousse (22, 24) assemblées qui sont parallèles à une première surface (36, 38), dans lequel n est au moins 1 et la plus proche de ces troisièmes coupes est éloignée de cette première surface (36, 38) d'au moins H_{D}/(n+1), dans lequel H_{D} est la hauteur du support en mousse (2) dans la direction de l'épaisseur (D).

10. Bande en mousse (1) confectionnée en tant que rouleau de bande d'étanchéité (10) avec une première partie de support en mousse (22) et une deuxième partie de support en mousse (24) et une couche de séparation (4), qui est disposée entre la première partie de support en mousse (22) et la deuxième partie de support en mousse, dans laquelle la bande en mousse s'étend dans une direction longitudinale (L), une direction de la largeur (B) perpendiculaire à celle-ci et une direction de l'épaisseur (D) perpendiculaire à la direction longitudinale (L) et à la direction de la largeur (B), dans laquelle la bande en mousse (1) présente une couche adhésive (8) sur une surface et ladite surface s'étend dans la direction longitudinale (L) et la direction de la largeur (B),
dans laquelle
la couche de séparation (4) s'étend à la fois dans la direction longitudinale (L), dans la direction de la largeur (B) et dans la direction de l'épaisseur (D), et ne s'étend pas ou seulement par endroits de manière parallèle par rapport à la direction de la largeur, mais s'étend au moins par endroits de manière incurvée par rapport à la direction de la largeur, dans laquelle la couche de séparation s'étend avec une forme ondulée dans ladite direction de la largeur, dans laquelle une autre couche, à savoir une couche de couverture (18), est disposée sur au moins une partie de support en mousse (22, 24) en plus de la couche de séparation (4) et de la couche adhésive (8) et la couche de séparation (4) s'étend jusqu'à la couche de couverture (18).

11. Bande de mousse selon la revendication 10,
**caractérisée en ce que**
la couche de séparation est disposée à l'intérieur du corps en mousse de manière à former un angle prédéfini avec la direction de l'épaisseur, dans laquelle ledit angle varie, de manière préférée ledit angle varie au-delà de la direction de la largeur d'au moins 10°, de manière encore plus préférée d'au moins 20°, et en particulier de manière préférée d'au moins 30°.

12. Bande de mousse selon au moins l'une quelconque des revendications 10 à 11,
**caractérisée en ce que**
la zone de la plus grande pente du profil de la couche de séparation par rapport à la direction de la largeur est disposée de manière excentrée, dans laquelle la zone de la plus grande pente du profil de la couche de séparation par rapport à la direction de la largeur est de préférence décalée par rapport au centre de la bande d'étanchéité dans la direction de la largeur vers la surface latérale de la bande d'étanchéité tournée vers le côté intérieur d'espace dans l'état de montage.

13. Bande de mousse selon au moins l'une quelconque des revendications 10 à 12,
**caractérisée en ce que**
une autre couche, de manière préférée une autre couche de couverture (18), est disposée sur au moins une autre pièce de support en mousse (22, 24), en plus de la couche de séparation (4) et de la couche adhésive (8).

14. Bande de mousse selon la revendication 13,
**caractérisée en ce que**
la couche de séparation (4) s'étend jusque dans l'autre couche de couverture (18) ou jusque contre l'autre couche de couverture (18).

15. Bande de mousse selon au moins l'une quelconque des revendications 10 à 14,
**caractérisée en ce que**
la bande d'étanchéité est conçue de telle sorte que dans un état monté, la couche de séparation entre les pièces de support en mousse empêche sensiblement un passage d'air dans la direction de la largeur de la bande d'étanchéité.
